(19) Europäisches Patentamt / European Patent Office / Office européen des brevets

(11) **EP 2 237 558 A1**

(12) **EUROPEAN PATENT APPLICATION**

(43) Date of publication:
06.10.2010 Bulletin 2010/40

(51) Int Cl.:
*H04N 7/26* (2006.01)    *H04N 7/50* (2006.01)

(21) Application number: 09165804.7

(22) Date of filing: 17.07.2009

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: 03.04.2009 EP 09005012

(71) Applicant: **Panasonic Corporation
Kadoma-shi
Osaka 571-8501 (JP)**

(72) Inventors:
• **Narroschke, Matthias
63225 Langen (DE)**
• **Wedi, Thomas
63225 Langen (DE)**
• **Wittmann, Steffen
63225 Langen (DE)**

(74) Representative: **Grünecker, Kinkeldey,
Stockmair & Schwanhäusser
Anwaltssozietät
Leopoldstrasse 4
80802 München (DE)**

(54) **Coding for filter coefficients**

(57) The present invention provides a method for encoding, a method for decoding, an apparatus for encoding and an apparatus for decoding a video signal. At the encoder side, filter data are determined separately for at least two of the prediction signal, prediction error signal and reconstructed video signal. The filter data are encoded based on statistical relation between the at least two signals. In this way, the quality of the filtered signal may be improved and the overhear caused by the filter data signalling is reduced. At the decoder, the filter data is decoded based on statistical dependencies between the at least two signals. The filter is then set up based on the filter data and the at least two signals are filtered correspondingly.

**Fig. 5**

**Description**

The present invention relates to a method and an apparatus for video encoding and decoding using filters for filtering of video signals.

BACKGROUND OF THE INVENTION

At present, the majority of standardized video coding algorithms is based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, and MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted submacroblocks or simply blocks and having the size of, for instance, 8 x 8, 4 x 4, 16 x 8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called block of prediction residuals, is then calculated. Another encoding step is a transformation of a block of residuals from the spatial (pixel) domain into a frequency domain. The transformation aims at reducing the correlation of the input block. Further encoding step is quantization of the transform coefficients. In this step the actual lossy (irreversible) compression takes place. Usually, the compressed transform coefficient values are further compacted (losslessly compressed) by means of an entropy coding. In addition, side information necessary for reconstruction of the encoded video signal is encoded and provided together with the encoded video signal. This is for example information about the spatial and/or temporal prediction, amount of quantization, etc.

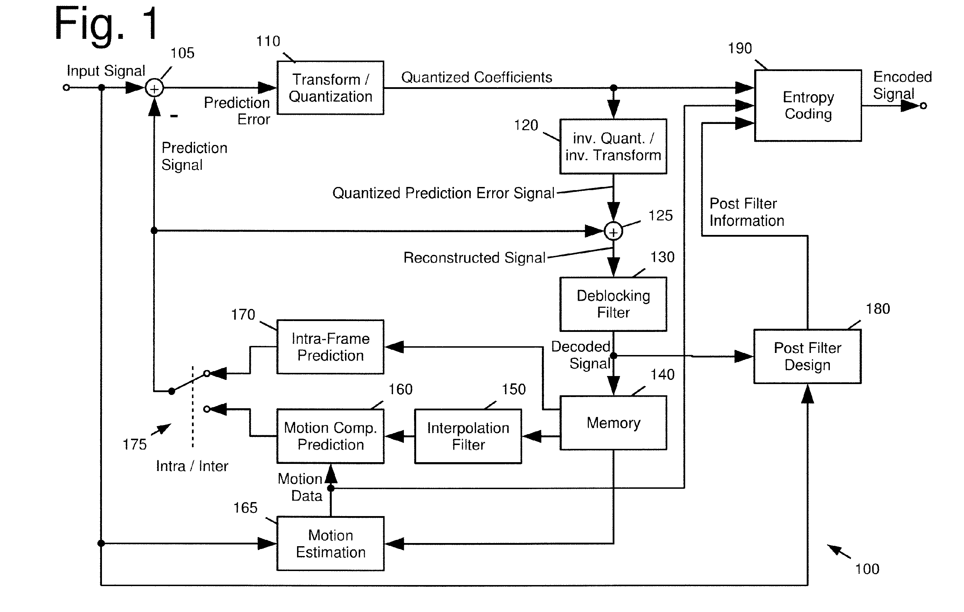

Figure 1 is an example of a typical H.264/MPEG-4 AVC standard compliant video encoder 100. The H. 264/MPEG-4 AVC standard combines all above-mentioned encoding steps. A subtractor 105 first determines differences between a current block to be encoded of an input video image (input signal) and a corresponding prediction block, which is used for for the prediction of the current block to be encoded. In H.264/MPEG-4 AVC, the prediction signal is obtained either by a temporal or by a spatial prediction. The type of prediction can be varied on a per frame basis or on a per macroblock basis. Macroblocks predicted using temporal prediction are called inter-encoded and macroblocks predicted using spatial prediction are called intra-encoded. The type of prediction for a video frame can be set by the user or selected by the video encoder so as to achieve a possibly high compression gain. In accordance with the selected type of prediction, an intra/inter switch 175 provides corresponding prediction signal to the subtractor 105. The prediction signal using temporal prediction is derived from the previously encoded images, which are stored in a memory 140. The prediction signal using spatial prediction is derived from the values of boundary pixels in the neighboring blocks, which have been previously encoded, decoded, and stored in the memory 140. The memory unit 140 thus operates as a delay unit that allows a comparison between current signal values to be encoded and the prediction signal values generated from previous signal values. The memory 140 can store a plurality of previously encoded video frames. The difference between the input signal and the prediction signal, denoted prediction error or residual, is transformed resulting in coefficients, which are quantized 110. Entropy encoder 190 is then applied to the quantized coefficients in order to further reduce the amount of data in a lossless way. This is mainly achieved by applying a code with code words of variable length wherein the length of a code word is chosen based on the probability of occurrence thereof.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images. Intra-fame prediction uses a predefined set of intra-prediction modes, which basically predict the current block using the boundary pixels of the neighboring blocks already encoded. The different modes of spatial intra-prediction refer to different directions of the applied two-dimensional prediction. This allows efficient spatial intra-prediction in the case of various edge directions. The prediction signal obtained by such an intra-prediction is then subtracted from the input signal by the subtractor 105 as described above. In addition, spatial intra-prediction mode information is entropy encoded and provided together with the encoded video signal.

Within the video encoder 100, a decoding unit is incorporated for obtaining a decoded video signal. In compliance with the encoding steps, the decoding steps include inverse quantization and inverse transformation 120. The decoded prediction error signal differs from the original prediction error signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal, which is known at both sides, the encoder and the decoder. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the quantized prediction error signal. The video signal after deblocking is the decoded signal, which is generally displayed at the decoder side (if no post filtering is applied). The deblocking filter of H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. The strength of the low pass filter is determined by the prediction signal and by the quantized prediction error signal. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency.

Intra-coded macroblocks are filtered before displaying, but intra prediction is carried out using the unfiltered reconstructed macroblocks.

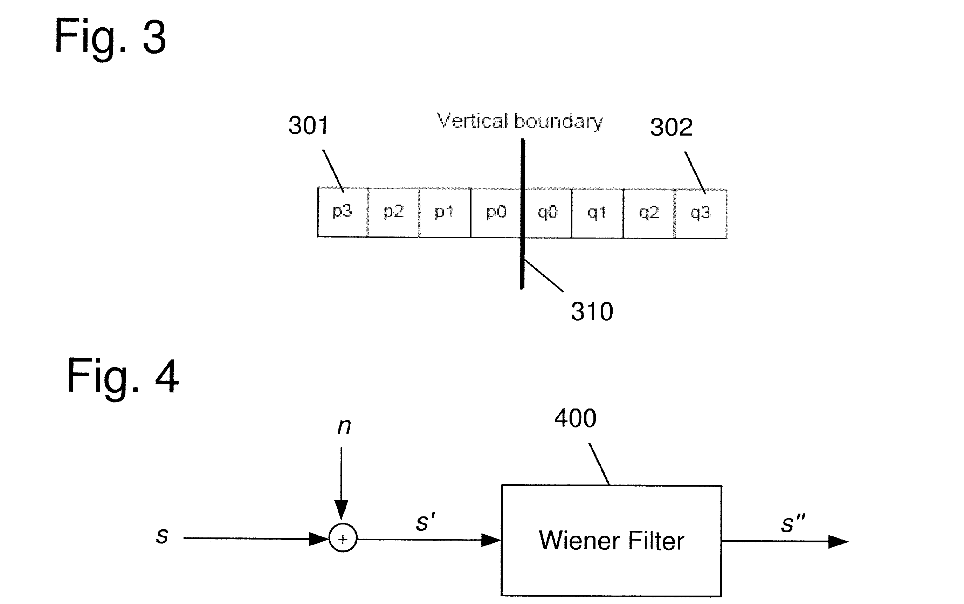

Figure 3 illustrates an example for the deblocking at a vertical block boundary 310, separating samples $p_3$, $p_2$, $p_1$, and $p_0$ of a first block 301 on its left and samples $q_3$, $q_2$, $q_1$, and $q_0$ of a second block 302 on its right. A linear deblocking filter with four coefficients is applied to the inputs samples $p_2$, $p_1$, $p_0$, $q_0$, $q_1$ and $q_2$, producing the following filtered outputs $P_{0,new}$ and $q_{0,new}$:

$$p_{0,new} = (p_2 - (p_1 << 1) + (p_0 + q_0 + 1) >> 1) >> 1,$$

$$q_{0,new} = (q_2 - (q_1 << 1) + (q_0 + p_0 + 1) >> 1) >> 1.$$

The decoded video signal is then stored in the memory 140.

In order to be decoded, inter-encoded images require also the previously encoded and subsequently decoded image(s). Temporal prediction may be performed uni-directionally, i.e., using only video frames ordered in time before the current frame to be encoded, or bidirectionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I-type macroblocks. An inter-encoded macroblock (P- or B- macroblock) is predicted by employing motion compensated prediction 160. First, a best-matching block is found for the current block within the previously encoded and decoded video frames by a motion estimator 165. The best-matching block then becomes a prediction signal and the relative displacement (motion) between the current block and its best match is then signalized as motion data in the form of three-dimensional motion vectors within the side information provided together with the encoded video data. The three dimensions consist of two spatial dimensions and one temporal dimension. In order to optimize the prediction accuracy, motion vectors may be determined with a spatial sub-pixel resolution e.g. half pixel or quarter pixel resolution. A motion vector with spatial sub-pixel resolution may point to a spatial position within an already decoded frame where no real pixel value is available, i.e. a sub-pixel position. Hence, spatial interpolation of such pixel values is needed in order to perform motion compensated prediction. This is achieved by interpolation filter 150. According to the H.264/MPEG-4 AVC standard, a six-tap Wiener interpolation filter with fixed filter coefficients and a bilinear filter are applied in order to obtain pixel values for sub-pixel positions in vertical and horizontal directions separately.

For both, the intra- and the inter-encoding modes, the differences between the current input signal and the prediction signal are transformed and quantized by the unit 110, resulting in the quantized coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality then high frequency components so that more bits can be spent for coding the low frequency components than the high frequency components. In the entropy coder, the two-dimensional matrix of quantized coefficients is converted into a one-dimensional array. Typically, this conversion is performed by a so-called zig-zag scanning, which starts with the DC-coefficient in the upper left corner of the two-dimensional array and scans the two-dimensional array in a predetermined sequence ending with an AC coefficient in the lower right corner. As the energy is typically concentrated in the left upper part of the , two-dimensional matrix of coefficients, corresponding to the lower frequencies, the zig-zag scanning results in an array where usually the last values are zero. This allows for efficient encoding using run-length codes as a part of/before the actual entropy coding.

H.264/MPEG-4 AVC employs scalar quantization 110, which can be controlled by a quantization parameter (QP) and a customizable quantization matrix (QM). One of 52 quantizers is selected for each macroblock by the quantization parameter. In addition, quantization matrix is specifically designed to keep certain frequencies in the source to avoid losing image quality. Quantization matrix in H.264/MPEG-4 AVC can be adapted to the video sequence and signalized together with the video data.

The H.264/MPEG-4 AVC includes two functional layers, a Video Coding Layer (VCL) and a Network Abstraction Layer (NAL). The VCL provides the encoding functionality as briefly described above. The NAL encapsulates the encoded prediction error signal together with the side information necessary for the decoding of video into standardized units called NAL units according to their further application such as transmission over a channel or storing in storage. There are VCL NAL units containing the compressed video data and the related information, as well as non-VCL units encapsulating additional data such as parameter set relating to an entire video sequence, or recently added Supplemental Enhancement Information (SEI) providing additional information that can be use to improve the decoding performance.

In order to improve the image quality, a so-called post filter 280 may be applied at the decoder side 200. The H.264/MPEG-4 AVC standard allows the sending of post filter information for such a post filter via the Supplemental Enhancement Information (SEI) message. The post filter information (a so-called post filter hint) is determined at the encoder side by means of a post filter design unit 180, which compares the locally decoded signal and original input signal. In general, the post filter information is an information allowing decoder to set up an appropriate filter. It may include, for instance, directly the filter coefficients. However, it may also include another information enabling setting up the filter, such as cross-correlation information related to the uncompressed signal, such as cross-correlation information between the original input image and the decoded image or between the decoded image and the quantization noise. This cross-correlation information can be used to calculate the filter coefficients. The filter information, which is output by the post filter design unit 180 is also fed to the entropy coding unit 190 in order to be encoded and inserted into the encoded signal.

At the decoder, the filter information may be used by a post filter, which is applied on the decoded signal before displaying.

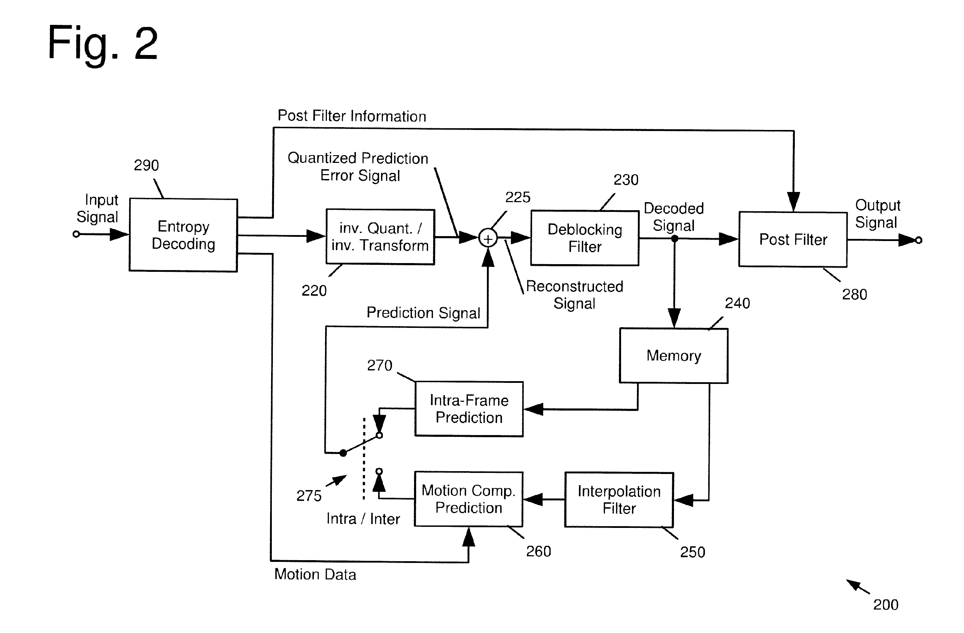

Figure 2 illustrates an example decoder 200 compliant with the H.264/MPEG-4 AVC video coding standard. The encoded video signal (input signal to the decoder) first passes to entropy decoder 290, which decodes the quantized coefficients, the information elements necessary for decoding such as motion data, mode of prediction etc., and the post filter information. The quantized coefficients are inversely scanned in order to obtain a two-dimensional matrix, which is then fed to inverse quantization and inverse transformation 220. After inverse quantization and inverse transformation, a decoded (quantized) prediction error signal is obtained, which corresponds to the differences obtained by subtracting the prediction signal from the signal input to the encoder in the case no quantization noise is introduced.

The prediction signal is obtained from either a temporal or a spatial prediction 260 and 270, respectively, which are switched 275 in accordance with a received information element signalizing the prediction applied at the encoder. The decoded information elements further include the information necessary for the prediction such as prediction type in the case of intra-prediction and motion data in the case of motion compensated prediction. Depending on the current value of the motion vector, interpolation of pixel values may be needed in order to perform the motion compensated prediction. This interpolation is performed by an interpolation filter 250. The quantized prediction error signal in the spatial domain is then added by means of an adder 225 to the prediction signal obtained either from the motion compensated prediction 260 or intra-frame prediction 270. The reconstructed image may be passed through a deblocking filter 230 and the resulting decoded signal is stored in the memory 240 to be applied for temporal or spatial prediction of the following blocks.

The post filter information is fed to a post filter 280, which sets up a post filter accordingly. The post filter is then applied to the decoded signal in order to further improve the image quality. Thus, the post filter is capable of adapting to the properties of the video signal entering the encoder.

In summary, there are three types of filter used in the latest standard H.264/MPEG-4 AVC: an interpolation filter, a deblocking filter and a post filter. In general, the suitability of a filter depends on the image to be filtered. Therefore, a filter design capable of adapting the image characteristics is advantageous. The coefficients of such a filter may be designed as Wiener filter coefficients.

Figure 4 illustrates a signal flow using a Wiener filter 400 for noise reduction. To an input signal s, noise n is added, resulting in a noisy signal s' to be filtered. With the goal of reducing the noise n, a Wiener filter is applied to the signal *s'*, resulting in the filtered signal *s''*. The Wiener filter 400 is designed to minimize the mean square error between the input signal *s*, which is the desired signal, and the filtered signal *s''*: This means that Wiener filter coefficients *w* correspond to the solution of the optimization problem $\arg_w \min E[(s-s'')^2]$ which can be formulated as a system of linear equations called Wiener-Hopf equations, operator $E[x]$ indicating the expected value of *x*. The solution is given by:

$$w = R^{-1} \cdot p \, ,$$

where w is an *M* x 1 vector containing the optimal coefficients of Wiener filter having order *M, M* being a positive integer, $R^{-1}$ denotes the inverse of an *M* x *M* autocorrelation matrix *R* of the noisy signal *s'* to be filtered, and *p* denotes an *M* x 1 cross correlation vector between the noisy signal *s'* to be filtered and the original signal *s.* Further details on adaptive filter design can be found for example in S. Haykin, "Adaptive Filter Theory", Fourth Edition, Prentice Hall Information and System Sciences Series, Prentice Hall, 2002*,* which is incorporated herein by reference.

Thus, one of the advantages of the Wiener filter 400 is that the filter coefficients can be determined from the autocorrelation of the corrupted (noisy) signal and the cross correlation of the corrupted signal and the desired signal. In video coding, quantization noise is superposed to the original (input) video signal in the quantization step. Wiener filtering in the context of video coding aims at the reduction of the superposed quantization noise in order to minimize the mean squared reconstruction error.

Filter information that is transmitted from the encoder to the decoder can either be directly the calculated filter coefficients or the cross correlation *p* which is necessary for calculating the Wiener filter and which cannot be determined at the decoder. Transmitting such side information may improve the quality of filtering, but, on the other hand, requires additional bandwidth. Similarly, further improving the filter (for instance, by increasing its order, or by its separate determining and/or application to parts of the video signal) may even more improve the video quality. However, the requirements on bandwidth for transmitting/storing such an encoded video data including the corresponding filter information will also increase.

## SUMMARY OF THE INVENTION

The problem underlying the present invention is based on the observation that further improving the quality of video filtering is typically connected with increasing requirements of bandwidth for providing the filter information with the encoded video data.

The aim of the present invention is to provide an efficient encoding and decoding mechanisms, which improve the quality of the encoded and/or decoded video signal by means of an efficient filtering approach.

This is achieved by the features as set forth in the independent claims.

Preferred embodiments are the subject matter of the dependent claims.

It is the particular approach of the present invention to consider at least two of a prediction video signal, a prediction error signal, and a reconstructed video signal for the determining of the filter data and for filtering, wherein the filter data of the at least two signals are encoded by exploiting the statistical relation between these filter data.

Such an approach provides on one hand an improved filtering performance and on the other hand, reduces the bandwidth necessary for the transmission of the filter data. Thus, an improvement in quality of the decoded video signal may be achieved with respect to a particular rate necessary for storing/transmitting such encoded video signal.

According to an aspect of the present invention, a method for encoding a video signal including at least one video frame is provided. A video signal is predicted in spatial or temporal respect and a prediction error signal is calculated based thereon. Based on the prediction video signal, and the prediction error signal, a video signal is reconstructed. Filter data for filtering at least two of the prediction video signal, the prediction error signal and the reconstructed video signal are determined and encoded. The encoding is performed based on a statistical relation between the filter data of the at least two of the prediction video signal, the prediction error signal and the reconstructed video signal.

According to another aspect of the present invention, a method for decoding an encoded video signal including at least one video frame is provided. A video signal is predicted in spatial or temporal respect and a prediction error signal is obtained from the encoder side. Based on the prediction video signal and the prediction error signal, a video signal is reconstructed. The filter data are decoded based on statistical dependencies between the filter data of at least two of the prediction video signal, the prediction error signal and the reconstructed video signal. Accordingly, a filter is set up in accordance with the decoded filter data and the at least two of the prediction signal, the prediction error signal and the reconstructed video signal are filtered.

According to still another aspect of the present invention, an encoder for encoding a video signal including at least one video frame is provided. The encoder comprises a predictor for predicting a video signal in spatial or temporal respect, a subtracter for calculating a prediction error signal based on the prediction video signal, and a reconstructor for reconstructing a video signal based on the prediction video signal and the prediction error signal. Further comprised is a filter design unit for determining filter data for filtering at least two of the prediction video signal, the prediction error signal and the reconstructed video signal, and a filter data encoder for encoding the determined filter data based on statistical relation between the filter data of the at least two of the prediction video signal, the prediction error signal and the reconstructed video signal.

According to still another aspect of the present invention, a decoder for decoding an encoded video signal including at least one video frame is provided. The decoder includes a predictor for predicting a video signal in spatial or temporal respect, and a reconstructor for reconstructing a video signal based on the prediction video signal and a prediction error signal, wherein the apparatus is capable of obtaining the prediction error signal from the encoder side. The decoder further comprises a decoder for decoding filter data based on statistical relation between the filter data of at least two of the prediction video signal, the prediction error signal and the reconstructed video signal, and a filter design unit for setting-up a filter in accordance with the decoded filter data and for filtering the at least two of the prediction video signal, the prediction error signal and the reconstructed video signal.

The encoding preferably further includes quantization of the prediction error signal, wherein the filter data are calculated as a Wiener filter based on the prediction video signal, the quantized prediction error signal, the reconstructed video signal and a video signal input to the encoder. In general, the encoding may further comprise any other encoding steps such as transformation, color space conversion, etc. The determination of filter data is not limited to the Wiener filter and the filter may be designed in any other way, for instance by solving an optimization problem other than minimizing the mean square error.

Preferably, the filter data are coded using at least one of predictive coding, transformation coding, vector quantization and coding, and coding based on a Markov model and/or a state transition diagram. However, any other coding allowing for exploiting the statistical dependencies between the filter data of the prediction signal and/or of the quantized prediction error signal and/or of the reconstructed signal, may be used as well. For instance, a run-length coding, or a variable length coding switching the coding tables in accordance with the previously encoded data, or a joint entropy coding which may encode a combination of a filter data of different video signals and/or color components as a single codeword, may be employed.

In accordance with a preferred embodiment of the present invention, the filter data of the prediction video signal, of the prediction error signal and of the reconstructed video signal are encoded using a predictive coding. In particular, the filter data of the prediction video signal is predicted from the filter data of the reconstructed video signal and/or the filter data of the quantized prediction error is predicted from the filter data of the prediction video signal. The prediction may be performed, for instance by assuming, that the filter data of the prediction video signal and of the prediction error signal are equal. The prediction of a filter coefficient may also be performed, for instance by assuming, that the sum of a filter coefficient of the prediction video signal and of a filter coefficient of the reconstructed video signal are equal to a fixed value, such as the value one. The encoding is then performed by encoding the difference between the filter data and their prediction. However, the prediction of the filter data of one of the signals may also be performed using another function of the filter data of the remaining signals. For instance, the filter data of the reconstructed video signal may be predicted as a function of the filter data of the prediction video signal and of the filter data of the prediction error signal. Correspondingly, the decoder uses the statistical relation between the filter data of the signals for decoding them.

In particular, if predictive coding is used for the encoding of the filter data, the type of prediction may be signalized, allowing thus adapting the prediction to the characteristics of the filter data to be encoded. Similarly, the transformation and the Markov model may be signalized from the encoder to the decoder side in an adaptive manner within, for example, a sequence, a frame, or even a slice header. If vector quantization and associated coding of the vectors is used, the representative vectors may be signalized from the encoder to the decoder side in an adaptive manner within, for example, a sequence, a frame, or even a slice header.

Preferably, the filter data are determined for each color component separately, and the filter data of a first color component are encoded based on a statistical relation between the filter data of the first color component and the filter data of another color component. This allows exploiting the statistical relation also between the color components of the filtered signals.

In particular, the filter data includes at least one of filter coefficients, filter length, offset, and coding type of the filter data, and a cross correlation between a video signal input to the encoder and at least one of the prediction signal, the prediction error signal, and the reconstructed video signal. It is also possible to transmit cross correlation between the quantization noise and at least one of the prediction signal, the prediction error signal, and the reconstructed video signal. The cross correlation information may be used for determining the filter coefficients at the decoder. In general, any information may be signalized as the filter data, which may be used to determine the filter coefficients at the decoder side. Typically, such information is related to the original video signal input to the encoder or to the quantization noise, which is not known to the decoder side.

Preferably, the encoding of the filter data is performed with regard to the overall bit rate of the coded video signal. In particular, for lower overall bit rate, a lower rate is selected for encoding of the filter data and for higher overall bit rate, a higher rate is selected for encoding of the filter data. The filter data may include filter data quantization information specifying accuracy (precision) of at least one of offset, filter coefficients or cross correlation between a video signal input to the encoder and at least one of the prediction signal, the prediction error signal, or the reconstructed video signal, which is encoded accordingly and also included in the filter data. The lower the precision, the coarser is the quantization of the data. Preferably, the filter data quantization information is encoded using shorter codewords for filter data quantization information values specifying lower accuracy. This provides the advantage of maintaining the overhead caused by signalling of the filter data lower for low-rate encoded video data. The coding of the filter data quantization information may also be adaptive, wherein the codeword table may be signalized or derived based on an information signalized within the bitstream.

In accordance with an embodiment of the present invention, the filter data related to a video signal area is included within the bit stream after the encoded video signal area. This reduces memory requirements at the encoder, since it is not necessary to store at the encoder the encoded video stream in order to attach thereto a header with the relevant filter data.

In accordance with another embodiment of the present invention, the filter data related to a video signal area is included within the bit stream before the encoded video signal area. This enables reduction of memory requirement at the decoder, since it is not necessary to store the entire encoded/decoded video stream until the filter may be set up and applied.

Preferably, header information, the filter data and macroblock data are encoded using an arithmetic code in such a way that an individual codeword is provided for the header information, the filter data and the macroblock data. Thus, the encoder and correspondingly the decoder restarts before encoding each of the header information, the filter data and the macroblock data. This allows separate handling of these different types of data. However, the header information, the filter data and the macroblock data may also be encoded as a single codeword without restarting the encoder and decoder. Moreover, coding different from the arithmetic coding may also be employed.

A flag may be provided together with the encoded filter data to signal for which of the prediction signal, the prediction error signal, and the reconstructed video signal the filter data is encoded. Another flag may be provided in order to signal if an offset is encoded.

Preferably, the video signal is encoded and/or decoded based on the H.264/MPEG-4 AVC standard and the filter data is provided within the Supplemental Enhancement Information message. However, the present invention is not limited to H.264/MPEG-4 AVC and its enhancements and followers, and may be used for any video encoding mechanism, standardized or proprietary.

In accordance with another aspect of the present invention, a computer program product comprising a computer-readable medium having a computer-readable program code embodied thereon is provided, the program code being adapted to carry out the present invention.

In accordance with yet another aspect of the present invention, a system for transferring a video signal from an encoder side to a decoder side is provided, comprising an encoder as described above, a channel for storing or transmitting the encoded video signal, and a decoder as described above. In accordance with an embodiment of the present invention, the channel corresponds to the storing medium, for instance, a volatile or a non-volatile memory, an optic or a magnetic storing medium such as CD, DVD, BD or a hard disc, a Flash memory or any other storing means. In another embodiment of the present invention, the channel is a transmission medium, which can be formed by resources of a wireless or a wired system, or any combination of both in accordance with any standardized or proprietary transmission technology/system such as Internet, WLAN, UMTS, ISDN, xDSL, etc.

The above and other objects and features of the present invention will become more apparent from the following description and preferred embodiments given in conjunction with the accompanying drawings in which:

Figure 1     is a block diagram of a conventional H.264/MPEG-4 AVC video encoder;

Figure 2     is a block diagram of a conventional H.264/MPEG-4 AVC video decoder;

Figure 3     is a schematic drawing illustrating deblocking filtering at a vertical boundary between two blocks;

Figure 4     is a schematic drawing illustrating a transmission system including a Wiener filter;

Figure 5     is a block diagram of an example video encoder with a post filter designed by considering input signal with prediction signal, quantized prediction error signal, and decoded signal separately;

Figure 6     is a block diagram of an example video decoder with a post filter being set up using obtained post filter information;

Figure 7    is a block diagram of an example video encoder with a post filter designed in the frequency domain by considering input signal with prediction signal, quantized prediction error signal, and decoded signal separately;

Figure 8    is a block diagram of an example video decoder with a post filter in the frequency domain;

Figure 9A    is a schematic drawing of an example bitstream with data alignment in accordance with the present invention;

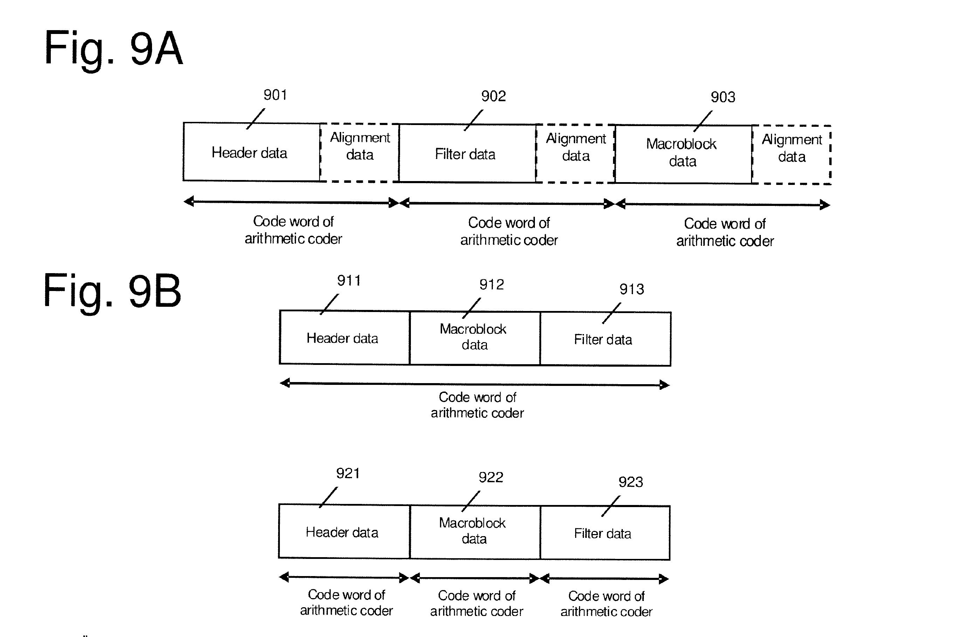

Figure 9A    is a schematic drawing of another example bitstream in accordance with the present invention;

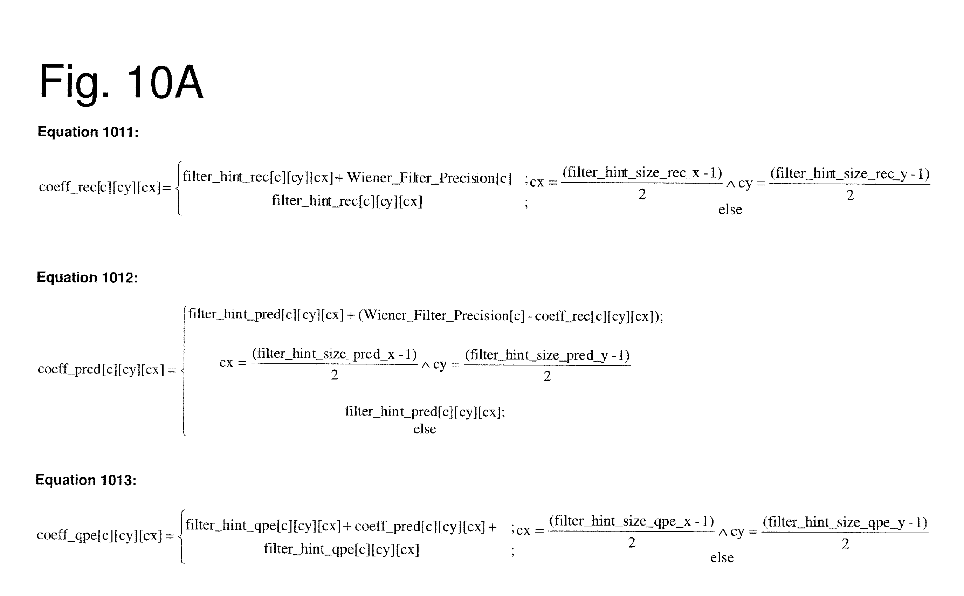

Figure 10A    shows an example of equations for deriving of the 2D FIR post filter coefficients for filtering of the reconstructed, prediction and prediction error signal in accordance with the present invention;

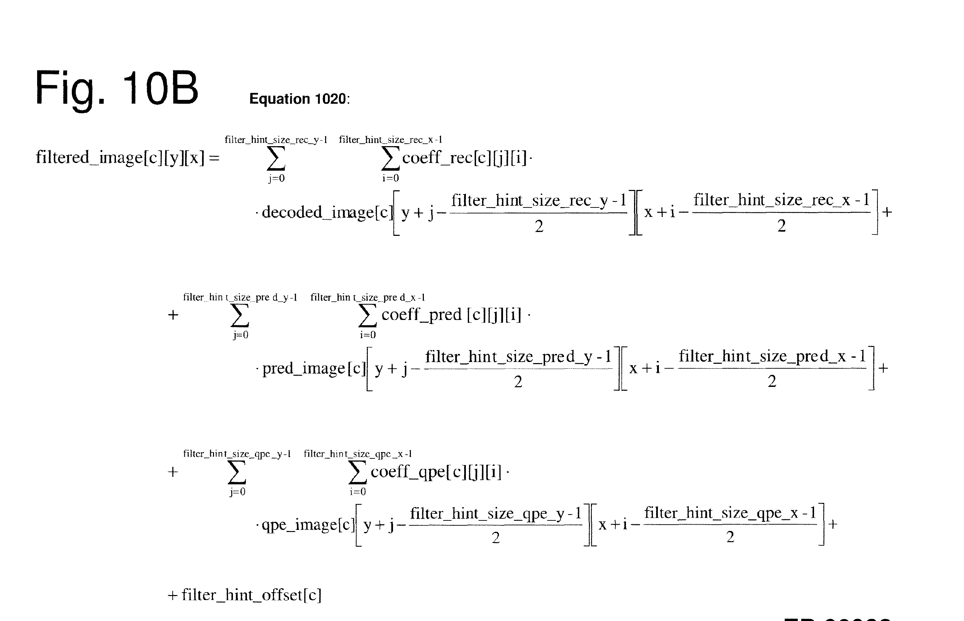

Figure 10B    shows an example equation for filtering of the video signal using filter coefficients derived as shown in Figure 10A;

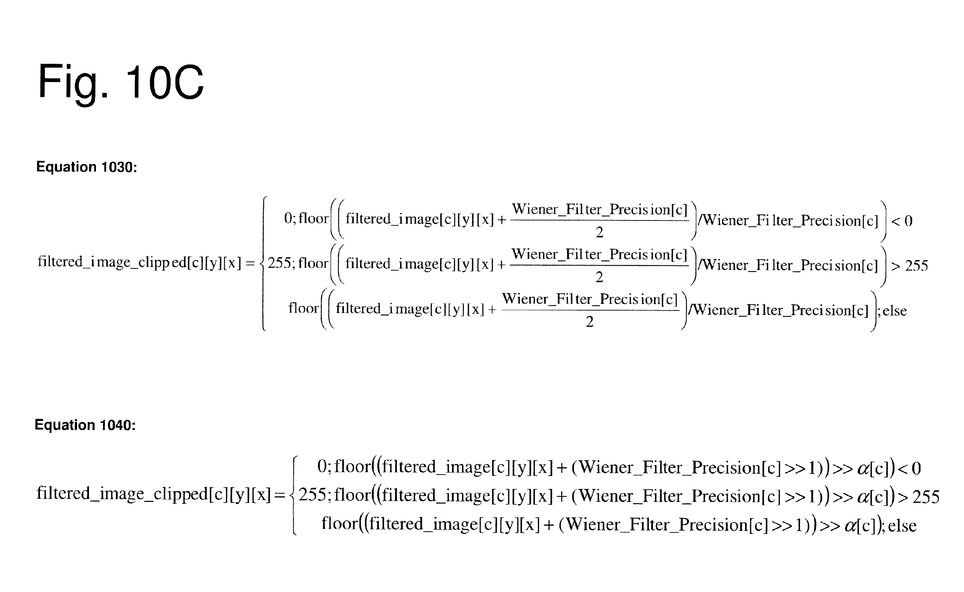

Figure 10C    shows an example equation for normalizing and clipping of the signal filtered as shown in Figure 10B;

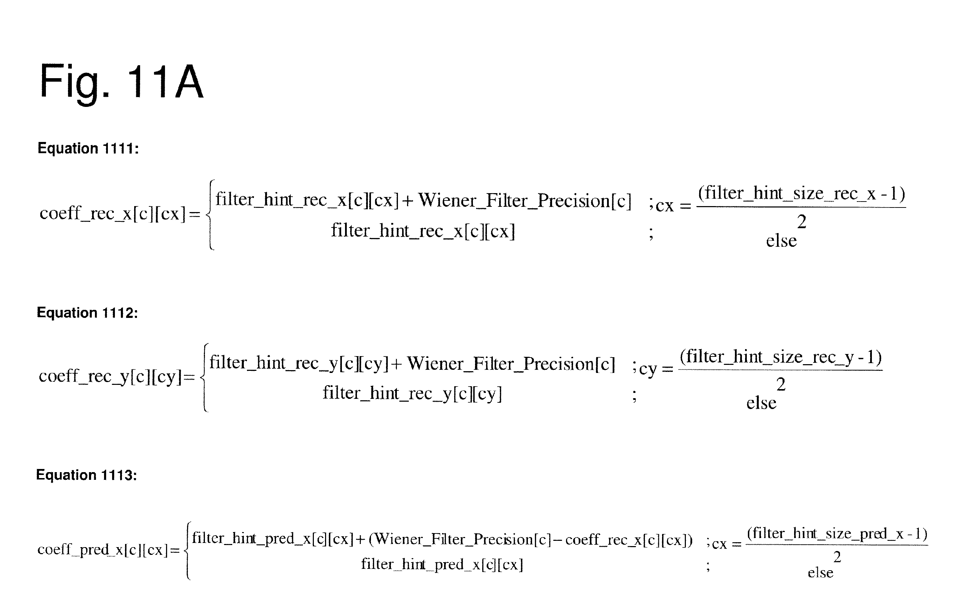

Figure 11A    shows a first part of an example of equations for deriving of the 1 D FIR post filter coefficients for filtering of the reconstructed, prediction and prediction error signal in accordance with the present invention;

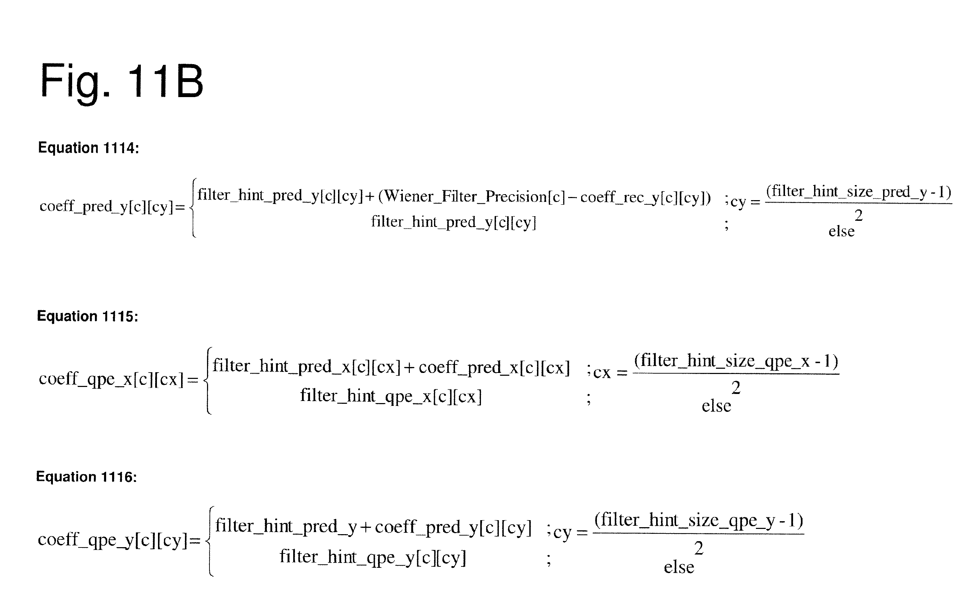

Figure 11 B    shows a second part of an example of equations for deriving of the 1 D FIR post filter coefficients for filtering of the reconstructed, prediction and prediction error signal in accordance with the present invention;

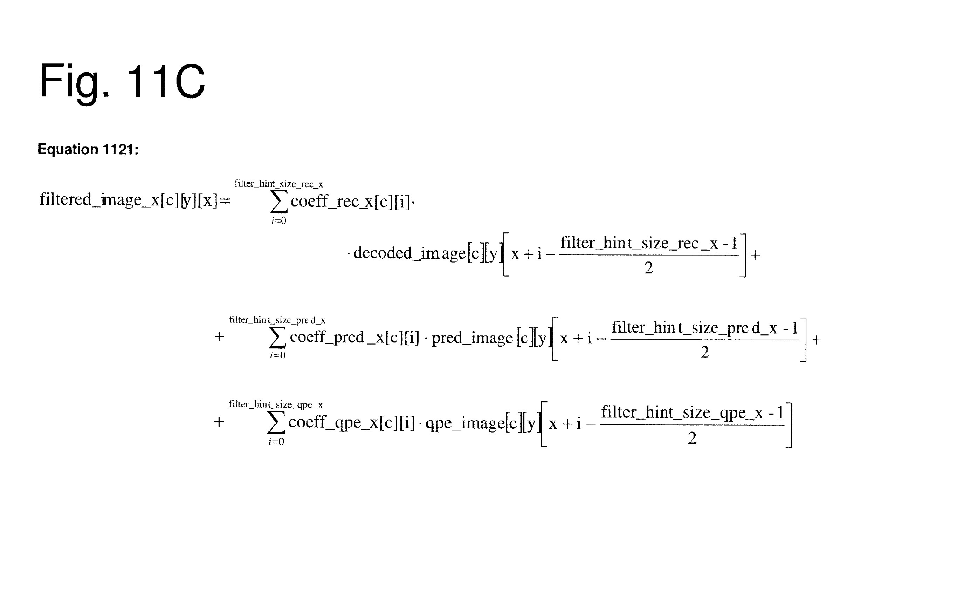

Figure 11C    shows an example equation for filtering of the x component of the video signal using filter coefficients derived as shown in Figures 11A and 11B;

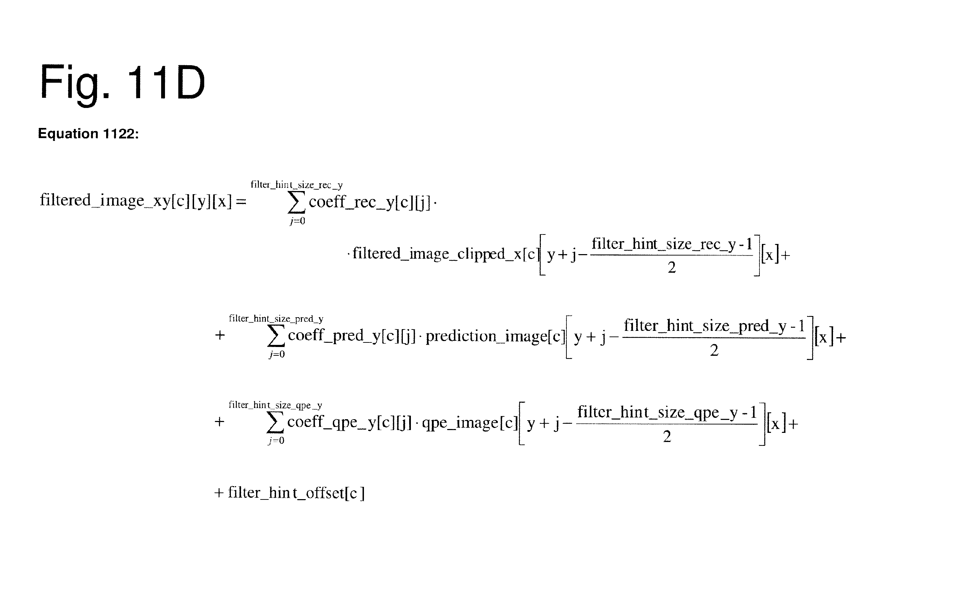

Figure 11 D    shows an example equation for filtering of the y component of the video signal using filter coefficients derived as shown in Figures 11A and 11B;

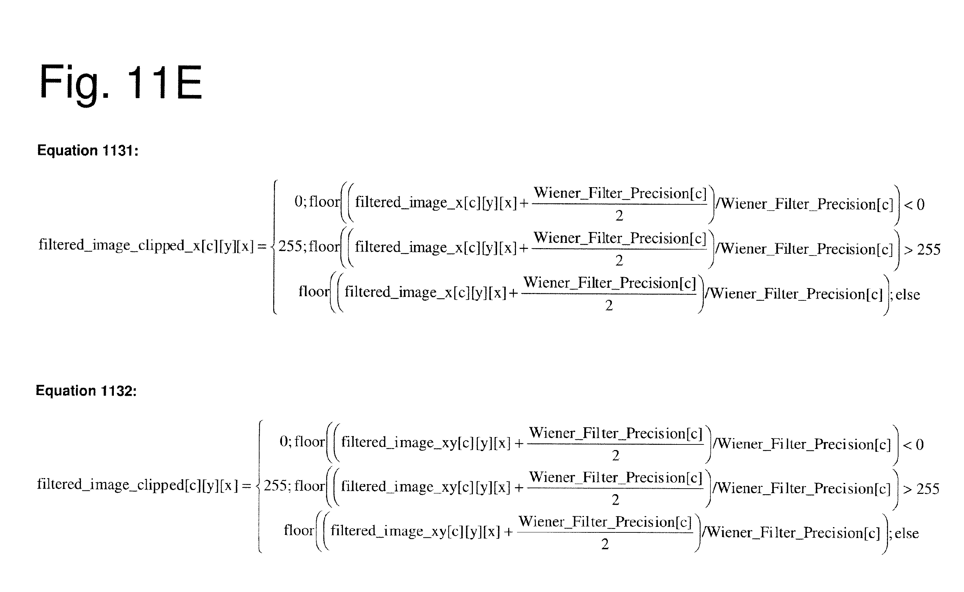

Figure 11 E    shows an example equation for normalizing and clipping of the signal filtered as shown in Figures 11C and 11D;

Figure 12R    shows a first part of an example of equations for deriving the cross correlation matrices in accordance with the present invention;

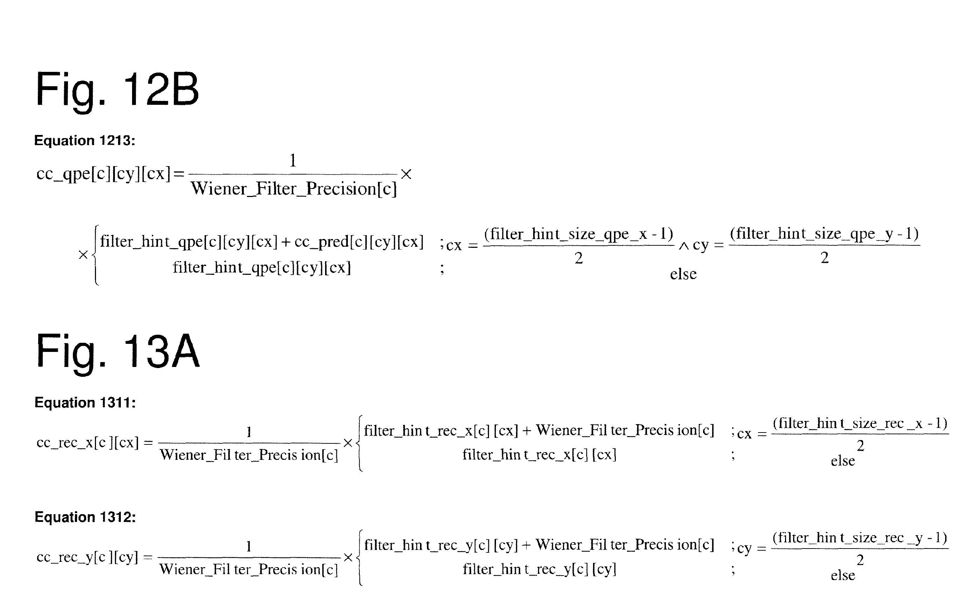

Figure 12B    shows a second part of an example of equations for deriving the cross correlation matrices in accordance with the present invention;

Figure 13A    shows an example of equations for deriving the cross correlation vectors between the original image and the decoded image in accordance with the present invention;

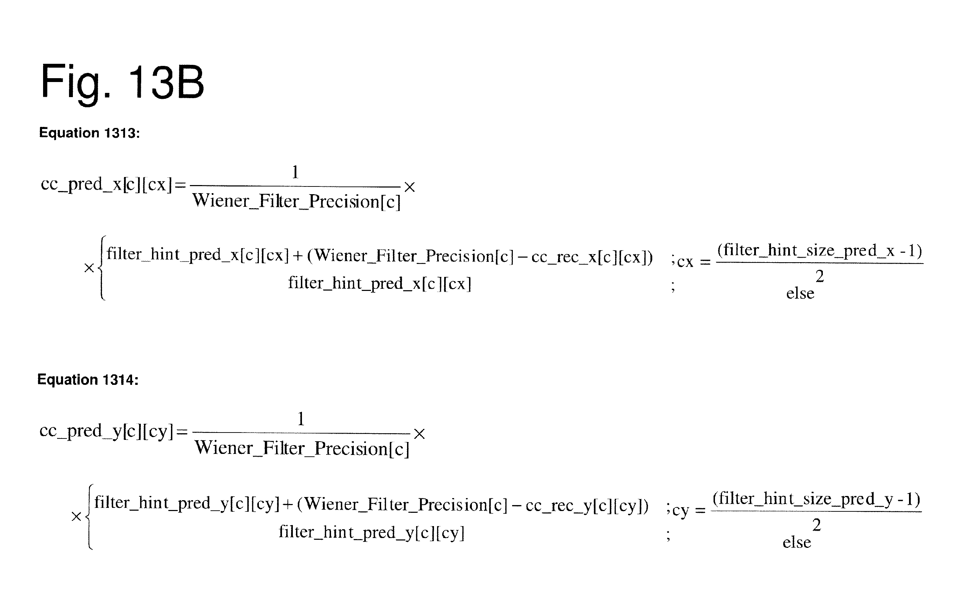

Figure 13B    shows an example of equations for deriving the cross correlation vectors between the original image and the prediction image in accordance with the present invention;

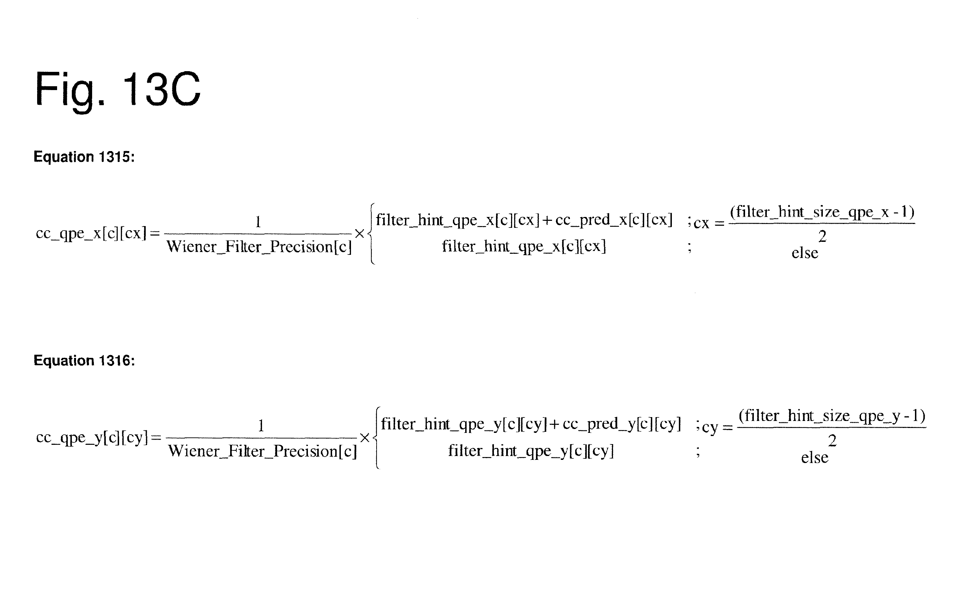

Figure 13C    shows an example of equations for deriving the cross correlation vectors between the original image and the quantized prediction error image in accordance with the present invention;

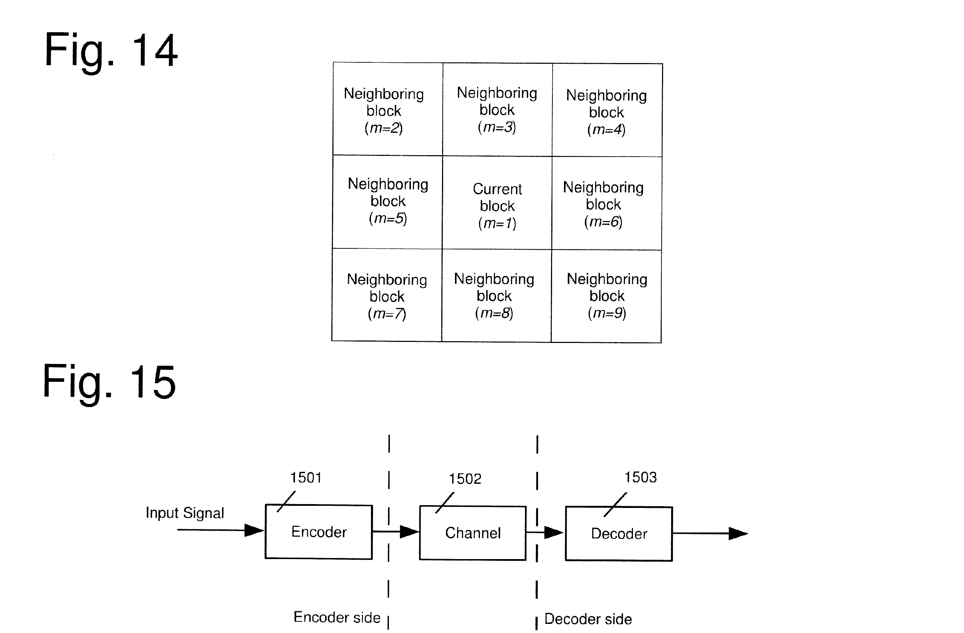

Figure 14    is a schematic drawing of example areas, the filter data of which may be predicted based on their statistical dependencies;

Figure 15    is a schematic drawing of a system with an encoder and a decoder in accordance with the present invention;

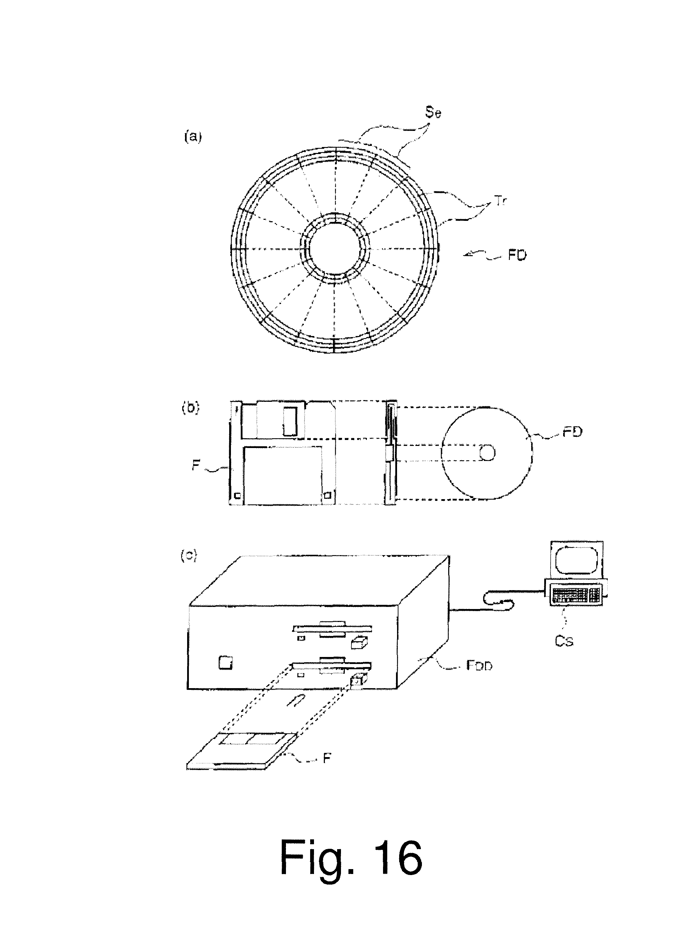

Figure 16    is an illustration of a recording medium for storing a program realizing any of the embodiments of the present invention by means of a computer system;

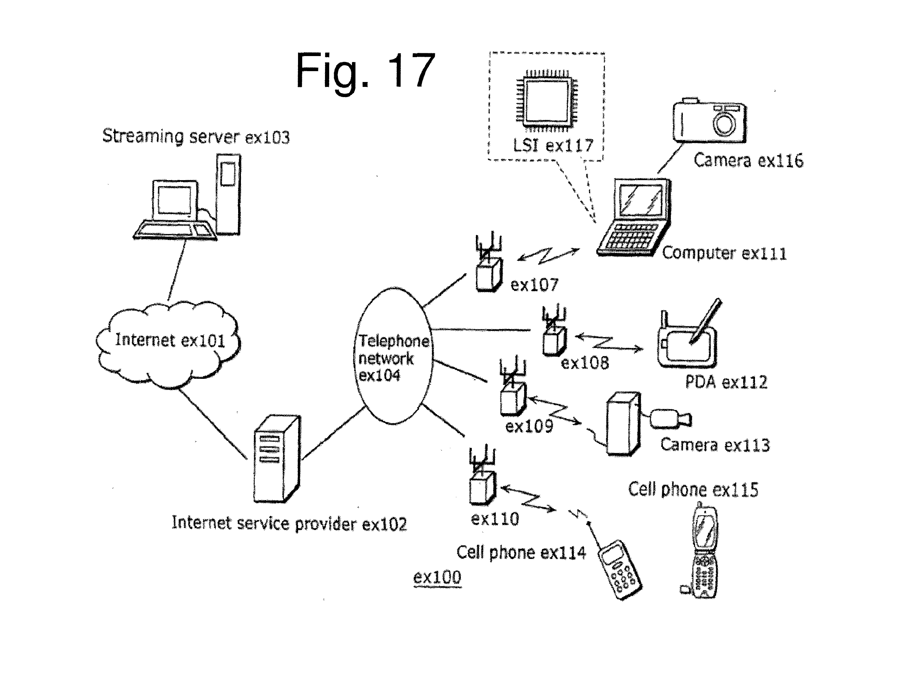

Figure 17    is a block diagram showing an overall configuration of a content supply system for realizing content distribution service using coding and decoding approach of the present invention;

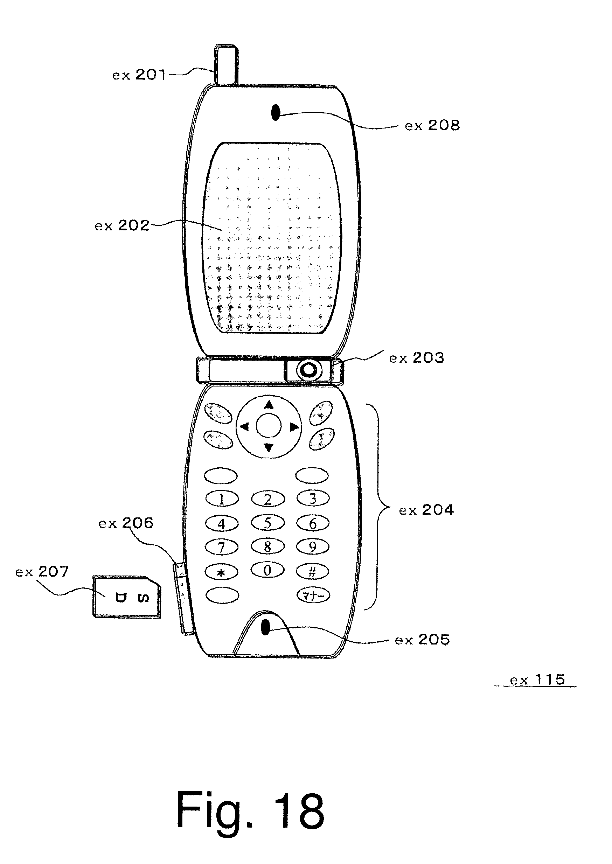

Figure 18    is a schematic drawing showing a cell phone for using the picture coding approach of the present invention;

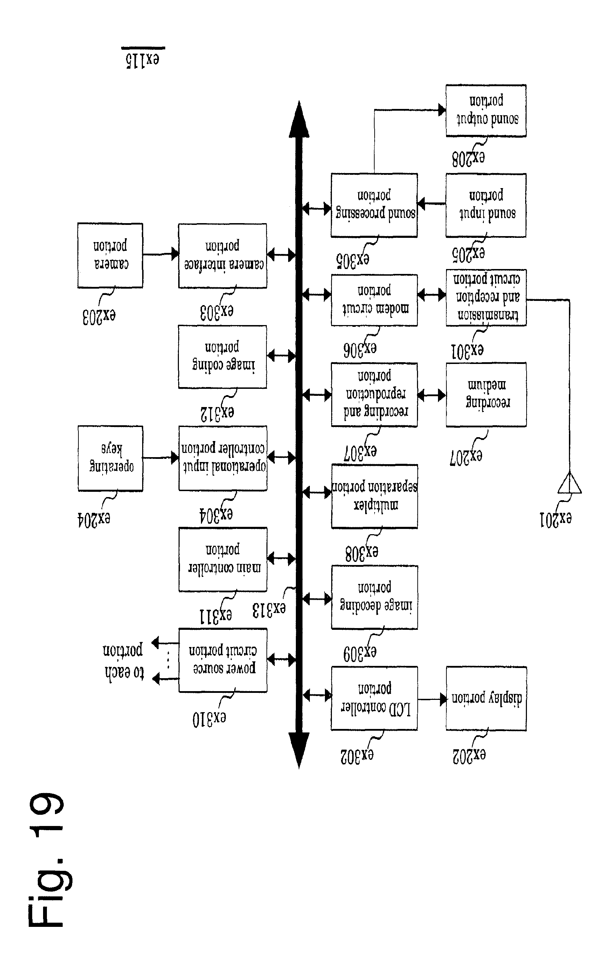

Figure 19    is a block diagram illustrating the functional blocks of the cell phone exemplified in Figure 18; and

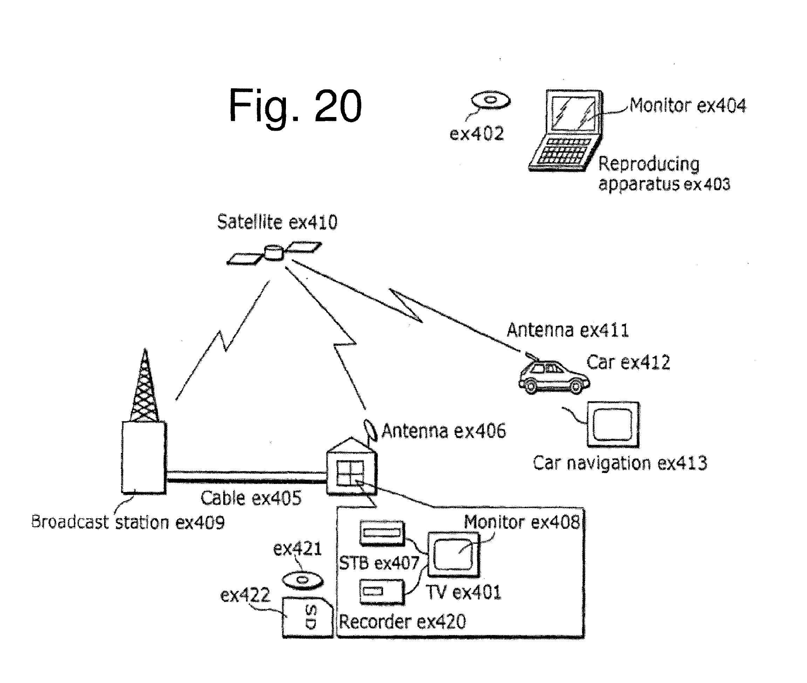

Figure 20    is illustrating a wireless digital system for incorporating the coding and decoding approach of the present invention.

DETAILED DESCRIPTION

In accordance with the present invention, in order to design a filter in either spatial or in the frequency domain, a prediction signal, a prediction error signal and a reconstructed (decoded) signal may be considered. This allows the consideration of noise for each of these three signals individually. A filter data is determined for at least two of these signals, and encoded exploiting the statistical relation between the filter data of the at least two of these signals.

In this way, the present invention provides an efficient filtering approach improving the quality of the filtered data while reducing the amount of data necessary for the transmission of such an encoded video stream.

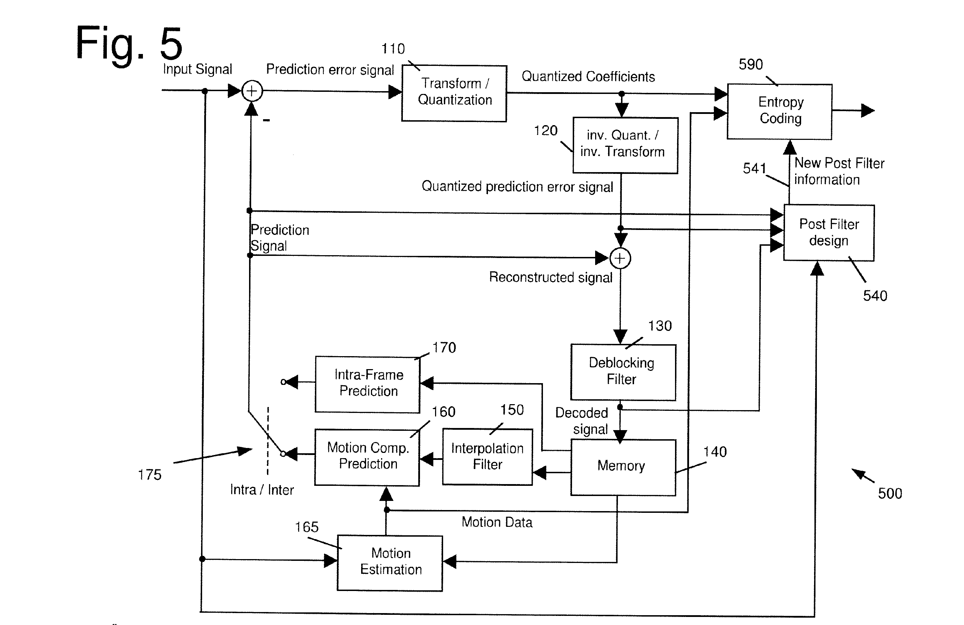

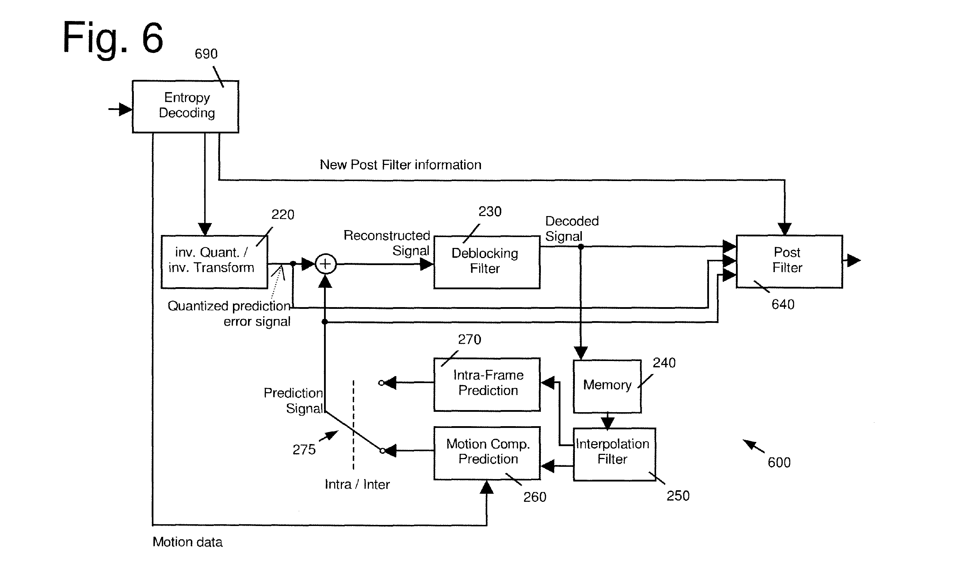

Figure 5 illustrates an example encoder 500 based on H.264/MPEG-4 AVC and Figure 6 shows the corresponding decoder 600. Accordingly, the post filter coefficients are calculated at the encoder side in the post-filter design unit 540 based on the input signal, decoded signal after applying the deblocking filter 130, prediction signal and quantized prediction error signal. The post-filter design unit 540 provides then either directly the filter coefficients or other kind of new post filter information 541 that can be used at the decoder to set up a corresponding post filter 640. Such new post filter information 541 may be, for instance, a cross correlation vector, or any other information. The post filter information 541 is encoded 590 at the encoder 500 and correspondingly decoded 690 at the decoder 600.

The optimization criterion for the design of the post filter may be, for instance, the minimum mean squared error between the desired signal $s$, which is generally the input signal - input to the encoder, and the filtered signal $s'$ with

$$s' = \sum_{i=1}^{M} w_i \cdot p_i + \sum_{i=1}^{N} w_{M+i} \cdot e_i + \sum_{i=1}^{O} w_{M+N+i} \cdot r_i + w_{M+N+O+1}$$

Hereby, $w_1,...,w_M$ are $M$ filter coefficients of the post filter, which are applied to $M$ prediction samples $p_1,...,p_M$ and $w_{M+1},...,w_{M+N}$ are $N$ filter coefficients of the post filter, which are applied to $N$ quantized prediction error samples $e_1,...,e_N$. Furthermore, $w_{M+N+1},...,w_{M+N+O}$ are $O$ filter coefficients of the post filter, which are applied to $O$ reconstructed samples $r_1,...,r_N$. An offset is given by $w_{M+N+O+1}$. The filter coefficients $w_1,..., w_{M+N+O+1}$ may directly represent the post filter information.

As described with respect to Figure 3, the filter coefficients minimizing the mean squared error between the desired signal $s$ and the filtered signal $s'$, may be determined by solving the Wiener-Hopf equations.

Filter design and/or application may be advantageously performed in the frequency domain. Designing a filter for filtering the video signal and filtering in the frequency domain is especially advantageous in case that the noise is added in the frequency domain, too. This is indeed the case for the majority of today's video encoding methods that quantize and transmit/store video signal transformed in the frequency domain.

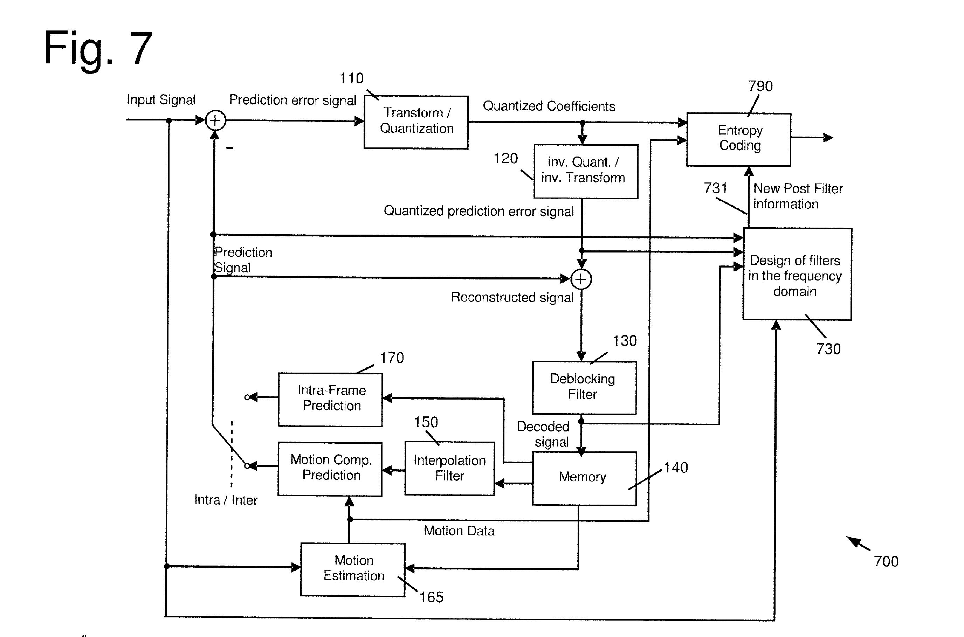

Figure 7 shows the encoder 700 with a post filter design unit 730, which determines the filter information in the frequency domain based on input (desired) video signal, prediction signal, quantized prediction error signal and the decoded (reconstructed and de-blocked) video signal. Such filter information 731 is then provided to the entropy encoder 790.

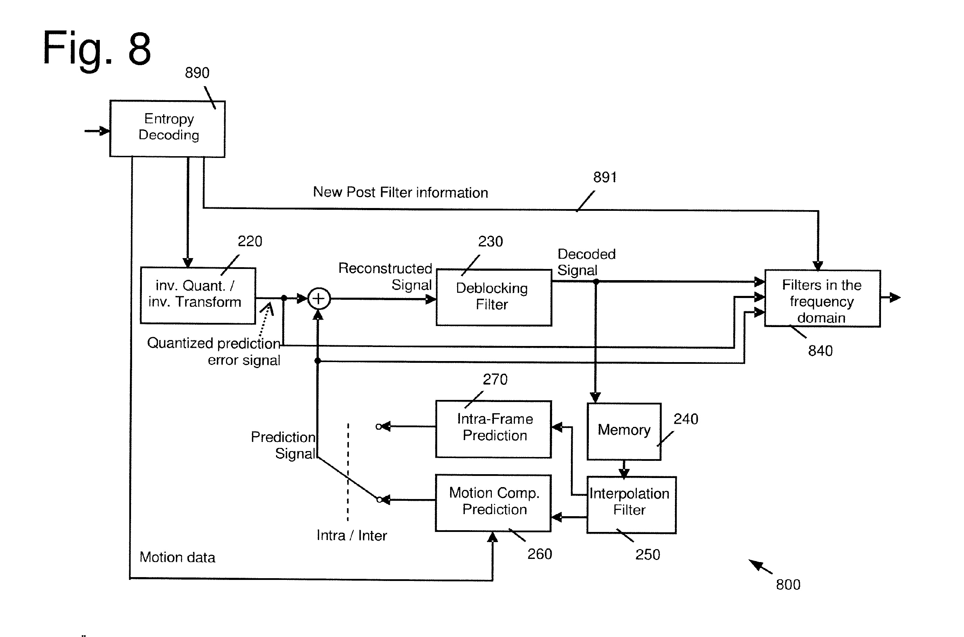

Figure 8 shows the decoder 800 corresponding to the encoder 700. Entropy decoder 890 decodes the filter information 891 and provides it to the filtering unit 840. The filtering unit 840 sets up the post filter and applies it to the decoded signal. Setting up the filter may here also include the filter design similar to filter design 730 at the encoder side, especially in case that instead of the filter coefficients the information necessary for their calculation is provided.

In this example, the prediction signal, the quantized prediction error signal, and the reconstructed signal are transformed into the frequency domain prior to the filter design/filtering. The transformation results in $K$ coefficients. The subsequent filtering is applied also in the frequency domain, individually for each coefficient. For example, the optimization criterion for the design of the post filter may be the minimum mean squared error between the desired coefficient $c_k$, which is generally a coefficient of the input signal, and the filtered coefficient $c'_k$ with

$$c'_k = \sum_{i=1}^{M} w_{k,i} \cdot c_{k,p,i} + \sum_{i=1}^{N} w_{k,M+i} \cdot c_{k,e,i} + \sum_{i=1}^{O} w_{k,M+N+i} \cdot c_{k,r,i} + w_{k,M+N+O+1} \qquad \forall \quad k = 1, \ldots, K,$$

wherein $w_{k,1},\ldots,w_{k,M}$ are $M$ filter coefficients of the post filter, which are applied to the $M$ coefficients of the prediction signal $c_{k,p,1},\ldots,c_{k,p,M}$, and $w_{k,M+1},\ldots,w_{k,M+N}$ are $N$ filter coefficients of the post filter, which are applied to the $N$ coefficients of the quantized prediction error $c_{k,e1},\ldots,c_{k,e,N}$. Furthermore, $w_{k,M+N+1},\ldots, w_{k,M+N+O}$ are $O$ filter coefficients of the post filter, which are applied to the $O$ coefficients of the reconstructed signal $c_{k,r,1},\ldots,c_{k,r,N}$. An offset is given by $w_{k,M+N+O+1}$. In this example, the filter coefficients $w_{k,1},\ldots, w_{k,M+N+O+1}$ represent the post filter information.

Again, the filter coefficients, which minimize the mean squared error between the wanted signal $s$ and the filtered signal $s'$, can be determined by applying the Wiener-Hopf equations.

The coefficients and the offsets need to be encoded and transmitted to the decoder. Alternatively, information necessary for calculating the filter coefficients and/or the offset at the decoder may be provided to the decoder side. Preferably, such information is somehow related to the original video signal input to the encoder, which is not available at the decoder side. For instance, a cross correlation between the original video signal and at least one of the prediction ignal, (quantized) prediction error signal and decoded signal, is included within the filter data. Also cross correlation between the quantization error signal and at least one of the prediction video signal, (quantized) prediction error signal and decoded signal, may be included within the filter data.

Providing the filter data for smaller parts of a video sequence such as a number of pictures, a group of pictures, a frame, a slice, or a block, may improve the quality of the filtered signal. On the other side, however, it increases the bandwidth required for the embedding of such filter data into the encoded video data stream.

Thus, the present invention provides an efficient coding scheme for the filter data (such as the filter coefficients and the offsets) that are necessary in various different filtering schemes such as those described with respect to Figures 5 to 8, in which individual filter coefficients are transmitted for the prediction signal, for the quantized prediction error signal, and for the reconstructed signal. In order to achieve a high coding efficiency, this coding scheme exploits statistical dependencies between the coefficients and the offsets to be coded and transmitted.

The present invention may also be applied to another filtering schemes. For instance, not all three signals: the prediction signal, the quantized prediction error signal, and the reconstructed signal, need to be considered. In accordance with the differential pulse code modulation applied to the video signal, a prediction signal and a prediction error signal is computed from the video signal to be encoded. A first filter data may then be determined based on statistical properties of the prediction signal and a second filter data is computed based on statistical properties of the prediction error signal. For determining the respective filter data, Wiener filter, or any other method may be used. Both the first and the second filter data are then encoded by exploiting their mutual statistical properties.

Moreover, another signals may be considered separately, such as those belonging to different color components.

The filter data may comprise filter coefficients and offsets. However, it may comprise also a filter length or other data. Instead of signaling the filter coefficients, the information necessary for calculating the filter coefficients may be signaled, allowing for calculating the filter coefficients at the decoder side, such as cross-correlation between the original video signal input to the encoder and any of the video signals to be filtered.

The filtering may, but does not need to be the post filtering. The present invention may also be applied to the interpolation filter and/or to the deblocking filter. Also a prediction filter applied at full pel positions of the reference frame is possible. Moreover, the filter data of, for instance, the prediction error signal may be used for the design of more than one filter (e.g., for the post filter and the interpolation filter). In such cases, statistical dependencies between the filter data of different filters may also be exploited by the encoding.

In order to achieve higher coding efficiency of the filter information coding, statistical dependencies between the filter data (such as the filter coefficients and/or the offsets) of the filtered signals are exploited. This is achieved in by employing various coding techniques such as

-    coding using a prediction of the filter data,

-    transform coding of the filter data, or

- coding of the filter data using a Markov-model, or

- vector quantization and joint entropy coding
  which will be described in the following example with respect to spatial domain filtering, wherein the filter data comprises filter coefficients and offsets.

In order to exploit statistical dependencies between the filter coefficients and the offsets of the filtered signals, predictive coding is applied in accordance with an embodiment of the present invention. Accordingly, the filter coefficients $w_1,...,w_{M+N+O+1}$ are predicted with $\hat{w}_1,...,\hat{w}_{M+N+O+1}$ and the remaining prediction error $ew_1,...,ew_{M+N+O+1}$, corresponding to a difference between the filter coefficients $W_1,...,w_{M+N+O+1}$ and the predicted filter coefficients $\hat{w}_1,...,\hat{w}_{M+N+O+1}$, are encoded. The coding of the prediction error $ew_1,...,ew_{M+N+O+1}$ is generally more efficient than the coding of the coefficients $w_1,...,w_{M+N+O+1}$.

The prediction of current filter coefficients at the encoder (or decoder) is performed based on the filter coefficients already encoded (or decoded). However, the prediction may also take into account information other than the transmitted filter coefficients, which is already available at the decoder.

For instance, a predicted filter coefficient $\hat{w}_{i,t}$ is obtained as

$$\hat{w}_{i,t} = F_i(w_{1,t},\ldots,w_{i-1,t},w_{i+1,t},\ldots,w_{M+N+O+1,t},w_{1,t-1},\ldots,w_{M+N+O+1,t-1},w_{1,t-2},\ldots,w_{M+N+O+1,t-2},\ldots), \forall i .$$

Index $t$ indicates a time instance. The time instance is associated to the relative decoding order, i.e., information with a time index smaller than $t$ is already coded. For instance, the time instance $t$ may relate to an encoding (or decoding) of a picture, or even a single block, depending on the area for which the filter coefficients are determined. In general, function $F_i$ is a function depending on the all already encoded filter coefficients.

In particular, a linear predictor may be used for predicting the filter coefficients and offsets:

$$F_i = \alpha_i + \sum_{j=1, j\neq i}^{M+N+O+1} a_{j,t} \cdot w_{j,t} + \sum_{j=1}^{M+N+O+1} a_{j,t-1} \cdot w_{j,t-1} + \sum_{j=1}^{M+N+O+1} a_{j,t-2} \cdot w_{j,t-2} +\ldots \ \ \forall i ,$$

wherein $\alpha_i$ is a constant value. Predictor coefficients $a_{j,t},...,a_{j,t-1},...,a_{j,t-2},...$ and $\alpha_i$ can either be fixed or adaptive. In the case of adaptive predictor coefficients, it is possible to provide them to the decoder side, i.e., including them within the encoded video data, for instance, in the sequence header or in the frame header. It is also possible to derive them at the decoder from already received data. However, adapting of the predictor coefficients $a_{j,t},...,a_{j,t-1},...,a_{j,t-2},...$ and $a_i$ may be also performed for arbitrary parts (areas) of a single picture, such as slices or blocks.

In order to further reduce the bandwidth, the prediction error $ew_{1,t},...,ew_{M+N+O+1,t}$ may be encoded by a variable length code such as a Huffman code, an arithmetic code, a Golomb, code, an Elias code or any other variable length codes. However, also a fixed length code may be applied.

Predictive coding of filter data provides an advantage since the reconstructed video signal is based on the prediction signal and the (quantized) prediction error. Thus, there typically is a statistical relation especially between the reconstructed video signal and each of the prediction signal and the (quantized) prediction error. Often, the filter data determined for the reconstructed video signal and the filter data determined for the prediction signal will even have identical or similar values. In such a case, simple predicting the filter data, for instance, of the prediction signal by the value of the filter data of the reconstructed video signal provides an efficient means how to reduce the bandwidth necessary for the encoded video stream. The filter data of the prediction error may be predicted similarly, e.g. by the filer data of the prediction signal. However, the filter data of one signal does not necessarily have to be predicted pairwise, i.e. from another single signal. In general, the filter data of one signal may be predicted using an arbitrary function of filter data determined for the other signals. For instance, the filter data of the reconstructed video may be predicted using any function of the prediction error filter data and the prediction signal filter data.

Another possibility of exploiting the linear statistical dependencies between the coefficients and the offsets is transform coding in accordance with another embodiment of the present invention. Accordingly, the filter coefficients $w_{1,t},...,w_{M+N+O+1,t}$ are transformed by a transformation resulting in the transformation coefficients $cw_{1,t},...,cw_{M+N+O+1,t}$, which may be further encoded. The encoding of the transformation coefficients $cw_{1,t},...,cw_{M+N+O+1,t}$ is generally more efficient than the direct encoding of the filter coefficients and offsets $w_{1,t},...,w_{M+N+O+1,t}$. The transformation is performed as follows:

$$CW_t = T_t \cdot W_t,$$

wherein $CW_t$ is a vector containing the transformation coefficients $cw_{1,t},...,cw_{M+N+O+1,t}$, $W_t$ is a vector containing the filter coefficients $w_{1,t},...,w_{M+N+O+1,t}$, and $T_t$ is the transformation matrix at the time instance $t$. Depending on the characteristics of the input image/video, applying the same or different transformation at each time instance may provide benefit, respectively. The applied transformation can either be fixed, such as a discrete cosine transformation (DCT), fast Fourier transformation (FFT), or Karhunen-Loève transformation (KLT) with fixed coefficients. However, the transformation may also be adaptive. In the case of an adaptive transformation, it is possible to transmit the transformation information to the decoder, for instance, in the sequence header, in the frame or slice header. The transformation information may include either the transformation matrix or information enabling to obtain the transformation matrix.

In order to code the coefficients $cw_{1,t},...,cw_{M+N+O+1,t}$ a variable length code is preferably applied. However, a fixed length code may be applied as well.

Yet another possibility of exploiting statistical dependencies between the filter coefficients and the offsets is provided by the coding scheme that assumes a Markov source in accordance with still another embodiment of the present invention. Accordingly, a filter coefficient or an offset $w_{i,t}$ is coded using codewords that are conditioned on (possibly all) already coded and transmitted filter coefficients or offsets

$$w_{1,t},\ldots,w_{i-1,t},w_{i+1,t},\ldots,w_{M+N+O+1,t},w_{1,t-1},\ldots,w_{M+N+O+1,t-1},w_{1,t-2},\ldots,w_{M+N+O+1,t-2},\ldots.$$

Depending on the coding scenario and the input image/video, it is may be advantageous to take into account only a subset of the already encoded filter coefficients or offsets as a condition.

This coding scheme, which assumes a Markov source, requires knowledge of a source model. This model may either be fixed or adaptive. Such an encoding scheme may be described, for instance, by a state transition diagram. In the case of an adaptive model, it is possible to code and transmit the model (e.g. the state transition diagram) to the decoder side, for instance, in the sequence header, in the frame or slice header.

After coding using a Markov source, the encoded filter coefficients and offsets may be further encoded using a variable or a fixed length code.

The above three coding methods are examples of coding schemas that exploit the statistical relation between the encoded data. However, the present invention may also employ other methods taking into account the statistical relation between data to be encoded such as run-length coding, variable length coding with table switching based on the value of the previously encoded data, variable length coding wherein a combination of filter data of different signals is encoded as a single codeword, etc.

In accordance with yet another embodiment of the present invention, the encoded filter data are embedded within the encoded video bitstream. The syntax and semantics of the bitstream may be a subject of a future video standard.

In the following, an example of integration of the coding scheme in accordance with the present invention in a future video coding standard is described. In this example, it is assumed that a spatial domain filtering as described with reference to Figures 5 and 6 is applied and that the filter data include filter coefficients, for which a prediction scheme is applied.

The syntax elements may be encoded using a specific code specified by the standard. Such code may be a fixed length code or a variable length code. One possibility is the use of arithmetic coding, wherein the probability model may be adapted for the particular syntax elements. Another possibility is the use of code words according to a Huffman code. However, (universal) integer codes may be used as well, such as Unary codes or Golomb codes, exp-Golomb codes, Elias codes, etc.

It is preferable to transmit the post filter information (e.g. filter coefficients) at the end of the data it is related to, for instance, of the entire frame data or the slice data. This has the following advantage: The post filter data at the encoder is generally estimated after the encoding and decoding of a frame or slice or any image area the post filter data is determined for. If the post filter information is included into the header of the frame or slice comprising the data for which the filter has been estimated, the entire encoded bit stream needs to be stored until the post filter data is calculated and inserted thereto. In the case of arithmetic coding of all data, not only the bit stream but all syntax elements to be coded need to be stored and coded after the post filter information has been coded. In the case of transmitting the post filter information in the bit stream after the frame or slice data, no bit stream nor syntax elements have to be stored during the encoding. This reduces the requirements on memory size.

It is thus preferable to transmit the post filter information in a separate NAL unit, such as an SEI message in H.264/MPEG-4 AVC.

In the case, that the post filter data is transmitted within the frame or slice header, it is beneficial to terminate and restart the arithmetic coder. This has the advantage that only the bitstream but not all syntax elements have to be stored at the encoder.

There are more possibilities with respect to the location of the filter data within the bit stream containing the encoded video signal. In particular, the filter data may be included before or after the encoded video data, to which they are related.

In an embodiment of the present invention, the composition of the bit stream is optimized for the decoder. In particular, the filter data are included in the bit stream within the slice or the frame header of the frame or slice, to which these filter data are related. In this case, the entire information about the post filter is known at the decoder before the decoding of the blocks of the slice or frame. This provides advantages such as reduction of memory, reduction of memory allocations, and reduction of storing operations in the decoder. The decoding may thus be performed faster and cheaper.

For instance, after the decoding and storing of a certain number of blocks within a slice or frame, the post filtering can be performed. The number of blocks that need to be stored before start of the post filtering depends on the filter size of the post filter. It is not necessary to decode and store all blocks of a slice or frame (i.e. reconstructed image and/or quantized prediction error image and/or prediction image) before the post filtering can be started.

In the slice header, a flag **(post_filter_flag[c])** may signal whether a particular color component is considered for the post filtering or not. In case post filtering should not be performed for a given color component, the decoder does not need to store any signal (i.e. reconstructed image and/or quantized prediction error image and/or prediction image) for the post filtering. moreover, in the case that filter coefficients which are associated to certain signals to be filtered, for instance, to the reconstructed image, quantized prediction error image, and prediction image, are all zero, it is not necessary to store this signal in the decoder for the post filtering.

In combination with an arithmetic coding, it may be further beneficial for encoders to generate individual code words for the header information, the filter data, and the remaining macroblock data. Individual code words means that the arithmetic coder is terminated after the general header information, restarted before encoding filter data and terminated afterwards, and restarted again before encoding the remaining macroblock data and terminated afterwards. For certain architectures, it may be preferable that the code words of the arithmetic coding have a length, which is an integer number of bytes (for instance architectures using byte alignment). The advantage of having individual code words is that they can be stored and reordered without the necessity of re-encoding. The use of aligned codewords, for instance byte aligned, further facilitates storing and reordering of the bit stream portions at the encoder.

Figure 9A illustrates such an example bit stream corresponding to an encoded slice or frame. First, the encoded header data 901 is included in the bitstream, followed by alignment data, if necessary. Then, the filter data 902 are inserted into the bitstream, followed by alignment data, if necessary. Finally, the data 903 related to encoded macroblocks of the video signal are included into the bitstream together with alignment data, if the alignment data are necessary.

In another embodiment of the present invention, the composition of the bit stream is optimized for the encoder. In particular, the filter data is included in the bit stream after the related macroblock data. In this case, the entire information about the post filter can be generated after the encoding of the blocks of a slice or a frame. This has advantages such as reduction of memory, reduction of memory allocations, and reduction of storing operations in the encoder. The encoding can be performed faster and cheaper.

The calculation of the optimal Wiener filter coefficients of a post filter requires all data, on which the filter will operate. In the case of the present invention, the entire reconstructed image and/or quantized prediction error image and/or prediction image. At the encoder, this data is only available after a complete encoding and decoding of a slice or a frame. During the complete encoding, the bit stream is already generated and stored and/or transmitted. Thus, the inclusion of the filter information before the macroblock data, would require the storing of the entire bit stream. In the case of arithmetic coding with only one code word (termination at the end of a slice or a frame), it would require also the storing of all syntax elements and a complete re-encoding thereof. The inclusion of the filter information after the macroblock data does not require these storing operations.

Figure 9B illustrates the header data 911, the filter data 912, and the macroblock data 913 encoded as a single codeword of an arithmetic code, i.e., without restarting the encoding process for encoding of different parts of the bitstream. Alternatively, the header data 921, the filter data 922, and the macroblock data 923 may be encoded individually, each in a separate codeword of the arithmetic code.

However, the present invention is not limited to using an arithmetic encoding and any other coding may also be used.A preferred syntax of the information elements within the bitstream for the sequence header and for the frame, is shown below.

**sequence_header**

| Description |
| --- |
| sequence_header() { |
| ... |
|   **postfilter** |
| ... |
|   if (posttilter!=0) |
|   { |
|     **post_filter_initial_probabilities** |
|   } |
| ... |

**frame**

| Description |
| --- |
| frame() { |
| ... |
|   if (posffilter!=0) |
|     for (c=0; c<3; c ++){ |
|       **post_filter_flag[c]** |
|       if (post_filter_flag[c]!=0) |
|         decode_post_filter(c) |
|     } |
|  } |
| ... |

The syntax element decode_post_filter(c) further includes the following syntax elements.

**decode post filter**

| Description |
| --- |
| decode_ post_ filter(c) { |
|   **filter_hint_type[c]** |
|   **filter_hint_size_rec_x[c]** |
|   **filter_hint size_rec_y[c]** |
|   **filter_hint_size_pred_x[c]** |
|   **filter_hint_size_pred_y[c]** |
|   **filter_hint_size_qpe_x[c]** |
|   **filter_hint_size_qpe_xy[c]** |
|   **filter precision [c]** |
|   if (filter_hint_type[c] ==0 ‖ filter_hint_type[c] ==1) { //2D |
|     for (cy=0; cy<filter_hint_size_rec_y[c]; cy++) |

(continued)

| |
|---|
| for (cx=0; cx<filter_hint_size_rec_x[c]; cx++) |
| **filter_hint_rec[c][cy][cx]** |
| for (cy=0; cy<filter_hint_size_pred_y[c]; cy++) |
| for (cx=0; cx<filter_hint_size_pred_x[c]; cx++) |
| **filter_hint_pred[c][cy][cx]** |
| for (cy=0; cy<filter_hint_size_qpe_y[c]; cy++) |
| for (cx=0; cx<filter_hint_size_qpe_x[c]; cx++) |
| **filter_hint_qpe[c][cy][cx]** |
| } |
| else { //1D |
| for (cx=0; cx<filter_hint_size_rec_x[c]; cx++) |
| **filter_hint_rec_x[cy][cx]** |
| for (cy=0; cy<filter_hint_size_rec_y[c]; cy++) |
| **filter_hint_rec[y][c][cy]** |
| for (cx=0; cx<filter_hint_size_pred_x[c]; cx++) |
| **filter_hint_pred[x][c][cx]** |
| for (cy=0; cy<filter_hint_size_pred_y[c]; cy++) |
| **filter_hint_pred_y[c][cy]** |
| for (cx=0; cx<filter_hint_size_qpe_x[c]; cx++) |
| **filter_hint_qpe_x[c][cx]** |
| for (cy=0; cy<filter_hint_size_qpe_y[c]; cy++) |
| **filter_hint_qpe[c][cy]** |
| } |
| **filter_hint_offset[c]** |
| } |

The semantics of the syntax elements in this example is described in the following.

**postfilter** indicates if a post filter can be applied on frame level.

**post_filter_initial_probabilities** indicates the initial probabilities to control the code for the post filter data.

**post_filter_flag[c]** indicates if a post filter is applied for the color component c, whereas c=0 corresponds to the luma component, c=1 and c=2 correspond to the two chroma components.

**filter_hint_type[c]** specifies the type of the transmitted filter hints for the color component c, whereas c=0 corresponds to the luma component, c=1 and c=2 correspond to the two chroma components. Possible values are 0 to 3 inclusive as specified in the following table.

**filter_hint_type values**

| Value | Description |
|---|---|
| 0 | coefficients of a 2D FIR filter |
| 1 | cross correlation matrix |
| 2 | coefficients of two 1 D FIR filters |
| 3 | two cross correlation vectors |

**filter_hint_size_rec_x** specifies the horizontal size of the filter coefficient or cross correlation array for the decoded signal.

**filter_hint size_rec_y** specifies the vertical size of the filter coefficient or cross correlation array for the decoded signal.

**filter_hint_size_pred_x** specifies the horizontal size of the filter coefficient or cross correlation array for the prediction signal.

**filter_hint_size_pred_y** specifies the vertical size of the filter coefficient or cross correlation array for the prediction signal.

**filter_hint_size_qpe_x** specifies the horizontal size of the filter coefficient or cross correlation array for the quantized prediction error signal.

**filter_hint_size_qpe_y** specifies the vertical size of the filter coefficient or cross correlation array for the quantized prediction error signal.

**filter_hint_rec[c][cy][cx]** specifies an element of the filter coefficient matrix for the decoded signal or an element of the cross correlation matrix between the original and the decoded signal. c=0 corresponds to the luma component, c=1 and c=2 correspond to the two chroma components. cy represents a counter in vertical direction. cx represents a counter in horizontal direction.

**filter_hint_pred[c][cy][cx]** specifies an element of the filter coefficient matrix for the prediction signal or an element of the cross correlation matrix between the original and the prediction signal. c=0 corresponds to the luma component, c=1 and c=2 correspond to the two chroma components. cy represents a counter in vertical direction. cx represents a counter in horizontal direction.

**filter_hint_qpe[c][cy][cx]** specifies an element of the filter coefficient matrix for the quantized prediction error signal or an element of the cross correlation matrix between the original and the quantized prediction error signal. c=0 corresponds to the luma component, c=1 and c=2 correspond to the two chroma components. cy represents a counter in vertical direction. cx represents a counter in horizontal direction.

**filter_hint_rec_x[c][cx]** specifies an element of the filter coefficient vector for the horizontal filtering of decoded signal or an element of the horizontal cross correlation vector between the original and the decoded signal. c=0 corresponds to the luma component, c=1 and c=2 correspond to the two chroma components. cx represents a counter in horizontal direction.

**filter_hint_pred_x[c][cx]** specifies an element of the filter coefficient vector for the horizontal filtering of prediction signal or an element of the horizontal cross correlation vector between the original and the prediction signal. c=0 corresponds to the luma component, c=1 and c=2 correspond to the two chroma components. cx represents a counter in horizontal direction.

**filter_hint_qpe_x[c][cx]** specifies an element of the filter coefficient vector for the horizontal filtering of quantized prediction error signal or an element of the horizontal cross correlation vector between the original and the quantized prediction error signal. c=0 corresponds to the luma component, c=1 and c=2 correspond to the two chroma components. cx represents a counter in horizontal direction.

**filter_hint_rec_y[c][cy]** specifies an element of the filter coefficient vector for the vertical filtering of decoded signal or an element of the vertical cross correlation vector between the original and the decoded signal. c=0 corresponds to the luma component, c=1 and c=2 correspond to the two chroma components. cy represents a counter in vertical direction.

**filter_hint_pred_y[c][cy]** specifies an element of the filter coefficient vector for the vertical filtering of prediction signal or an element of the vertical cross correlation vector between the original and the prediction signal. c=0 corresponds to the luma component, c=1 and c=2 correspond to the two chroma components. cy represents a counter in vertical direction.

**filter_hint_qpe_y[c][cy]** specifies an element of the filter coefficient vector for the vertical filtering of quantized prediction error signal or an element of the vertical cross correlation vector between the original and the quantized prediction error signal. c=0 corresponds to the luma component, c=1 and c=2 correspond to the two chroma components. cy represents a counter in vertical direction.

**filter_hint_offset[c]** specifies on offset value. c=0 corresponds to the luma component, c=1 and c=2 correspond to the two chroma components.

**filter_precision[c]** specifies the precision of the post filter information. For each color component c, the value syntax element filter_precision[c] specifies the value of precision Wiener_Filter_Precision[c], for example, according to the following table:

| filter_precision[c] | Wiener_Filter_Precison[c] |
|---|---|
| 0 | 8 |
| 1 | 16 |
| 2 | 32 |
| 3 | 64 |
| 4 | 128 |
| 5 | 256 |

(continued)

| filter_precision[c] | Wiener_Filter_Precison[c] |
|---|---|
| 6 | 512 |
| 7 | 1024 |
| 8 | 2048 |
| 9 | 4096 |
| 10 | 8192 |
| 11 | 16384 |

**Wiener_Filter_Precision[c]** specifies filter data quantization information, which determines the precision of the filter coefficients.

The present invention is not limited to having 12 different possibilities for filter_precision[c] and Wiener_Filter_Precision[c]. It is also possible to have more or less of the possible values. Also the assignment of the information element value (filter_precision[c]) and the filter precision (Wiener_Filter_Precision[c]) may be chosen differently, for instance, the lower values of the information element may correspond to higher values of the filter precision. It may also be advantageous to choose a particular mapping between the value of the information element and the filter precision. The mapping and the code used for encoding the filter_precision[c] values may be designed together in order to achieve a good overall coding efficiency.

The number of possible different Wiener_Filter_Precision[c] values may be signalized for instance encoded using fixed length or variable length codes.

The mapping between the values of the information element filter_precision[c] and the values of the filter precision Wiener_Filter_Precision[c] may also be signalized. However, in order to reduce the bandwidth necessary for such a signalling, it may be assumed, for instance, that the values of Wiener_Filter_Precision[c] are all powers of two. In such a case, it is furthermore possible to derive the Wiener_Filter_Precision[c] values on the encoder side and on the decoder side similarly based only on the knowledge of the smallest Wiener_Filter_Precision[c] value (in the example table above the smallest value is 8) and on the overall number of possibilities (in the example table above the number of possible values is 12). This would require to code only one Wiener_Filter_Precision[c] value, for instance, the smallest value, and the overall number of possibilities.

The lower the Wiener_Filter_Precision[c] value, the lower is the accuracy of the filter data and the lower is the rate necessary for the transmission thereof.

At a low overall bit rate of the encoded video data, the relative amount of bits used for the coding of the filter precision information is high. At a high overall bit rate of the encoded video data, the relative amount of bits used for the coding of the filter precision information is negligible.

Thus, at a low overall bit rate, a very low bit rate for the coding of the filter precision information is desired. At high overall bit rate, a higher bit rate for the coding of the filter precision information may still be acceptable. To fulfil these requirements, a coding scheme is preferably applied, with a bit rate of the filter precision information adapted to the overall bit rate, for instance, optimized for a low overall bit rate. With the mapping between the filter_precision[c] and Wiener_Filter_Precision[c] as shown above, the small Wiener_Filter_Precision[c] values result in coarser quantization of the filter data, for instance, filter coefficients. Consequently, the bit rate necessary for the encoded filter data, including encoded Wiener_Filter_Precidion parameter as information element filter_precision[c], is reduced for the lower video data rates.

The reduction of bit rate necessary for encoding of smaller Wiener_Filter_Precision[c] values may be achieced, for instance, by an assignment of short code words to signalize small Wiener_Filter_Precison[c] and assignment of large code words to large Wiener_Filter_Precison[c]. For example, a Unary code according to the following table may be employed:

| filter_precision[c] | Codeword |
|---|---|
| 0 | 1 |
| 1 | 01 |
| 2 | 001 |
| 3 | 0001 |

(continued)

| filter_precision[c] | Codeword |
|---|---|
| 4 | 00001 |
| 5 | 000001 |
| 6 | 0000001 |
| 7 | 00000001 |
| 8 | 000000001 |
| 9 | 0000000001 |
| 10 | 00000000001 |
| 11 | 000000000001 |

Other variable length codes that the Unary code may also be applied. The choice of the code is preferably Another example is a Golomb code according to the following table:

| filter_precision[c] | Codeword |
|---|---|
| 0 | 10 |
| 1 | 11 |
| 2 | 010 |
| 3 | 011 |
| 4 | 0010 |
| 5 | 0011 |
| 6 | 00010 |
| 7 | 00011 |
| 8 | 000010 |
| 9 | 000011 |
| 10 | 0000010 |
| 11 | 0000011 |

Another example is a Golomb code according to the following table:

| filter_precision[c] | Codeword |
|---|---|
| 0 | 100 |
| 1 | 101 |
| 2 | 110 |
| 3 | 111 |
| 4 | 0100 |
| 5 | 0101 |
| 6 | 0110 |
| 7 | 0111 |
| 8 | 00100 |
| 9 | 00101 |

(continued)

| filter_precision[c] | Codeword |
|---|---|
| 10 | 00110 |
| 11 | 00111 |

Of course, also fixed codeword length is possible, such as in the case of 16 possibilities:

| filter_precision[c] | Codeword |
|---|---|
| 0 | 0000 |
| 1 | 0001 |
| 2 | 0010 |
| 3 | 0011 |
| 4 | 0100 |
| 5 | 0101 |
| 6 | 0110 |
| 7 | 0111 |
| 8 | 1000 |
| 9 | 1001 |
| 10 | 1010 |
| 11 | 1011 |
| 12 | 1100 |
| 13 | 1101 |
| 14 | 1110 |
| 15 | 1111 |

It is also possible to switch between different codeword tables. The choice of the codeword table could also be coded and signalled by the encoder to the decoder, preferably prior the filter_precision[c], since in this case the quantization step size can be decoded immediately.

It is furthermore possible to choose one codeword table out of several appropriate codeword tables by a fixed rule. Such a fixed rule could be based on the number of bits already used for the decoding of the current frame or slice. The rule may also be based on the quantization parameter which is used at the beginning of the decoding of the current frame or slice or which is used in average for the decoding of the current frame or slice. It may also be based on the quantized prediction error signal, for instance, on its variance. It may also be based on the prediction signal, for instance, on its variance, or in any other measure determined based on the prediction signal and/or prediction error signal.

The coding of the binary symbols representing the information element filter_precision[c] can be performed also by using arithmetic coding. Hereby the same or an individual code could be used for the coding of each binary symbol. The code could also be dependent on contexts. Due to the conditional coding, the coding efficiency could be further increased. One possibility is to use the value of filter_precision[i] as condition for the coding of filter_precision [i+1] and/or filter_precision[i+2]. Furthermore, it is possible to code, transmit and use different precisions for the coefficients of each component. This means that individual values of filter_precision are used for the filter data corresponding to the reconstructed image signal, to the prediction signal, and to the quantized prediction error signal. It is also possible to use different precisions for the filter data according to each of the signals, e.g. the use of individual precisions for each c and cy of filter data filter_hint_rec_y[c][cy].

At the encoder, the value Wiener_Filter_Precison[c] may be advantageously determined by the minimization of the Lagrangian costs of the overall bit rate and mean squared reconstruction error between the original image signal and the image signal after filtering. The Lagrangian costs for a certain value of Wiener_Filter_Precison[c] may be determined, for instance, by a complete encoding and measuring of the required bits and of the resulting mean square reconstruction error. Another possibility is to estimate the rate and the mean square reconstruction error. An estimation of the mean square reconstruction error may be performed by filtering only a certain subset of the image signal and assume that mean square reconstruction error for this subset approximates the mean square reconstruction error of the whole image signal. It is also possible to test only a subset of the possible values Wiener_Filter_Precison[c], for instance, dependent on the quantization parameter values of the frame or slice.

The filter data that have been provided from the encoder side to the decoder side are used for decoding of the video signal. In particular, in the following, examples are shown, how to decode the encoded filter data and how to employ the decoded filter data for decoding of the video signal.

In the first and the second example, the filter coefficients and offsets are used to post filter the color components of the decoded images. In the case that cross correlation and offsets are transmitted and decoded, these cross correlation and offsets may be used to set up filters to post filter the color components of the decoded images as shown in the third and fourth example.

If predictive coding has been applied to the filter data, the filter coefficients, offsets and/or the cross correlation information are first reconstructed by adding a predicted value.

The first example relates to a post filter design and process in the case that coefficients of a 2D FIR filter are transmitted.

The coefficients of the post filter for filtering of the reconstructed, prediction and prediction error signal are derived from the received filter data and decoded as shown in Figure 10A, equations 1011, 1012 and 1013, respectively.

The **coeff_rec** contains the filter coefficients for the reconstructed (decoded) video signal, which are decoded based on the **filter_hint_rec** and **filter_hint_size_rec_x** and **filter_hint_size_rec_y** data included within the filter data as well as on the value **Wiener_Filter_Precision[c],** is coded and included in the bitstream, but may also be fixedly specified, for instance as **Wiener_Filter_Precision[c]=16384**, possibly for each value of c. **Wiener_Filter_Precision [c]** may be coded and included for any of the color components and/or any of prediction signal, prediction error signal and reconstructed video signal. Based on the filter coefficients for the reconstructed video signal (and on the encoded filter data **filter_hint_pred, filter_hint size_pred_x** and **filter_hint size_pred_y),** the filter coefficients of the prediction signal **coeff_pred** are decoded. Finally, the filter coefficients **coeff_qpe** for filtering quantized prediction error are decoded based on the decoded filter coefficients for filtering the prediction video signal **coeff_pred** (and on the predictively encoded filter data **filter_hint_qpe** as well as on **filter_hint_size_qpe_x** and **filter_hint_size_qpe_y)**.

The derived filter coefficients are then used to set up a filter and to filter the video signal as shown in Figure 10B, equation 1020.

In a second step, the filtered signal is normalized and clipped as shown in Figure 10C, equation 1030.

In the above formula, **filtered_image[c]** is the color component c after the post filtering process, **decoded_ image[c]** is the color component c of the decoded image, **pred_image** is the color component c of the prediction image, and **qpe_image** the color component c of the quantized prediction error image. Value c=0 corresponds to the luma component, c=1 and c=2 correspond to the two chroma components, respectively. In situations, in which a different color space than YUV is used, the correspondence may be according to the used color space. For example, in the case of the RGB color space, c=0 could correspond to the R (Red) component, c=1 could correspond to the G (Green) component, and c=2 could correspond to the B (Blue) component.

Step sizes in the form Wiener_Filter_Precision[$c$]=$2^{\alpha[c]}$,$\alpha[c]$= 0,1,2,..are very beneficial for implementations, e.g. for hardware or software implementations, since

- the division Wiener_Filer_Precision[$c$]/2 can be very efficiently realized by a bit-shift operation (Shifting of one bit to the right): Wiener_Filter_Precision[$c$]/ 2 = Wiener_Filter_Precision[$c$]>>1

- the division by Wiener_Filer_Precision[$c$] can be efficiently realized by a bit-shift operation (Shifting of $\alpha$ bits to the right).

Thus, the formula 1030 may be realized by means of equation 1040 as shown in Figure 10C.

The same assumption on the form of Wiener_Filter_Precision[c] may be applied to any of the formulas below, providing similar benefits.

The second example relates to a post filter design and process in the case that coefficients of two 1 D FIR filters are transmitted.

The filter coefficients of the post filter are derived as shown in Figure 11A and Figure 11B, equations 1111, 1112, 1113, 1114, 1115 and 1116.

Similarly to the previous example, the filter coefficients **("coeff"** in the name of the variable) for filtering the reconstructed video signal **("rec"** in the name of the variable) are decoded first, based thereon the filter coefficients for filtering the prediction signal **("pred"** in the name of the variable) are decoded and based on the latter, the coefficients for filtering the quantized prediction error signal **("qpe"** in the name of the variable) are decoded. The decoding is performed separately for the filter coefficients of the horizontal (marked by "**_x**" in the name of the variable) and vertical (marked by "**_y**" in the name of the variable) filters.

The derived filter coefficients are used to set up a filter and to filter the video signal as follows.

In a first step, the horizontal filtering is performed in accordance with equation 1121 in Figure 11C.

In a second step, the horizontally filtered signal is normalized and clipped as shown in Figure 11E, equation 1131.

In a third step, the vertical filtering is performed in accordance with equation 1122 in Figure 11D.

In a fourth step, the horizontally and vertically filtered signal is normalized and clipped as shown in Figure 11E, equation 1132.

In the above formula, **filtered_image[c]** is the color component c after the post filtering process, **decoded_image[c]** is the color component c of the decode image, **pred_image** is the color component c of the prediction image, and **qpe_image** the color component c of the quantized prediction error image. Value c=0 corresponds to the luma component, c=1 and c=2 correspond to the two chroma components, respectively.

The third example relates to a post filter design and process in the case that a cross correlation matrix is transmitted.

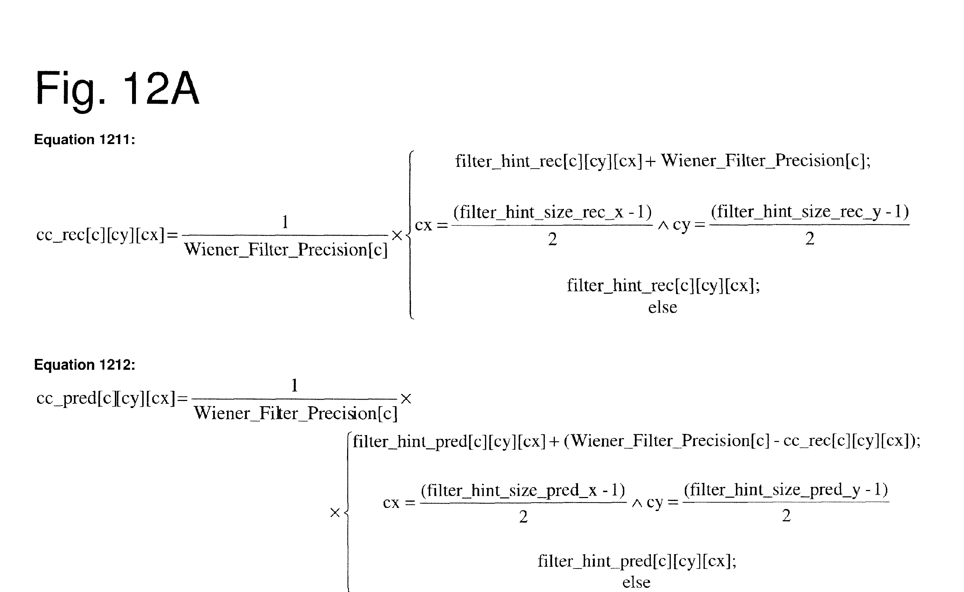

In a first step, the elements of the cross correlation matrix **cc_rec** between the original image and the decoded image are derived as shown in Figure 12A, equation 1211.

In a second step, the elements of the cross correlation matrix **cc_pred** between the original image and the prediction image are derived using the cross correlation matrix **cc_rec** decoded in the previous step. The corresponding equation 1212 is shown in Figure 12A.

In a third step, the elements of the cross correlation matrix **cc_qpe** between the original image and the quantized prediction error image are derived as shown in Figure 12B, equation 1213, using the cross correlation matrix **cc_pred** decoded in the previous step.

By the use of the derived cross correlation matrices, coefficients of a Wiener post filter can be derived which can be used together with the **filter_hint_offset[c]** in order to perform the filtering by a 2D FIR filter as described above.

The second example relates to a post filter design and process in the case that two cross correlation vectors are provided as the filter information.

In a first step, the elements of the horizontal cross correlation vector between the original image and the decoded image are derived as shown in Figure 13A, equation 1311.

In a second step, the elements of the vertical cross correlation vector between the original image and the decoded image are derived as shown in Figure 13A, equation 1312.

In a third step, the elements of the horizontal cross correlation vector between the original image and the prediction image are derived as shown in Figure 13B, equation 1313.

In a fourth step, the elements of the vertical cross correlation vector between the original image and the prediction image are derived as shown in Figure 13B, equation 1314.

In a fifth step, the elements of the horizontal cross correlation vector between the original image and the quantized prediction error image are derived as shown in Figure 13C, equation 1315.

In a sixth step, the elements of the vertical cross correlation vector between the original image and the quantized prediction error image are derived as shown in Figure 13C, equation 1316.

By the use of the derived cross correlation vectors, coefficients of a horizontal Wiener post filter and a vertical Wiener post filter can be derived which can be used together with the **filter_hint_offset[c]** in order to perform the filtering using two 1 D FIR filters described above.

In the above examples, the filter data of the reconstructed video signal are decoded first, based thereon the filter data of the prediction signal are decoded and based on the latter, the filter data of the prediction error signal are decoded. However, other decoding order is also possible. For instance, the filter data of the prediction error signal may be decoded alternatively or also based on the decoded filter data of the reconstructed video signal. Other dependencies and orders are also possible.

At the encoder, the coefficients and the cross correlation data needs to be quantized prior encoding and transmitting. In the case that the encoder represents in floating point the example value **coeff_double,** which can be for instance a filter coefficient or correlation data, the corresponding quantization is performed as follows:

$$coeff = \begin{cases} \lfloor coeff\_double \cdot Wiener\_Filter\_Precision + 0.5 \rfloor & ; coeff\_double \geq 0 \\ -\lfloor (-coeff\_double) \cdot Wiener\_Filter\_Precision + 0.5 \rfloor & ; coeff\_double < 0 \end{cases}$$

The value **coeff** may be represented in integer.

The previously described syntax, semantics and application at the decoder of the filter data are an example only. In general, the syntax elements for signalling the filter data may differ from this example. In particular, the filter data does not necessarily need to be provided on a per frame basis. The filter data may be sent regularly each several frames, or the presence of the filter data in a frame may be signalized with a flag enabling their irregular signalling. Moreover, the filter data may be signaled for a part of a video frame such as a slice, or a predefined set of macroblocks, or macroblocks or blocks. Adapting the filter characteristics locally may provide improved quality especially in images with parts having substantially different spatial and/or temporal characteristics.

The exploitation of the statistical relation between the filter coefficients (or offsets, or correlation information) is not restricted to the filter coefficients of only one color component. The statistical dependencies between the filter coefficients of different color components may be exploited as well, since the signals of the color components is typically correlated, which may result in correlated filter data. Thus, the filter information (data) of different color components may also be encoded exploiting these dependencies, for instance, by predictive coding, transform coding or a Markov-model assuming coding. Other kinds of coding exploiting the statistical relation between color components may also be used, such as run-length coding, or an entropy coding assigning using codeword table switching or encoding a combination of a plurality of filter data elements into a single codeword.

Furthermore, for encoding the filter data, statistical dependencies between the filter data of different image areas may be exploited as well. As an example, Figure 14 illustrates blocks in the neighbourhood of a block to be currently encoded/decoded. In case the filter data are determined on a per block basis, the filter data of the current block may also be encoded using the statistical relation between the current block and already decoded block in its neighbourhood, such as blocks m=2, ..., 5. However, the filter data may also be determined for other areas than blocks and the dependencies between the corresponding filter data of these areas may be exploited by encoding as shown above, for instance, by using a prediction, transformation, etc. Moreover, such image areas, the filter data of which is encoded using their statistical relation, may also be located in different images, for instance, at the corresponding positions, or at the motion compensated positions.

The precision of the filter data Wiener_Filter_Precision may also be encoded as a quantization information of filter data and transmitted to the decoder for each/any of the signals and/or color components as Wiener_Filter_Precision [c]. However, it may also be fixedly defined. Signal prediction scheme for the prediction of the filter coefficients may also be signalized. This is advantageous especially in the cases when an adaptive prediction scheme is applied.

In general, the filter data may be determined for filtering using a finite impulse response filter (FIR) or infinite response filter (IIR) filter. The filter may be a 2D non-separable or a 1D separable filter.

The filters for filtering different color components and/or signals (prediction signal, quantized prediction error, reconstructed signal) may have the same fixed length in order to avoid repeating signalling the filter order. However, the filter length may also be coded for each color component and individually for the quantized prediction error signal, the prediction signal, and the reconstructed signal. Encoding of the filter length may also exploit the statistical relation between the filter length for filtering the different signals and/or color components. Accordingly, predictive coding, transform coding, or Markov-coding or any other coding may be applied to the filter length information.

The filter coefficients for the prediction (video) signal and the quantized prediction error signal may be the same due to a joint encoder optimization and have thus to be transmitted only once. In such cases, the fact, that the filter coefficients are the same may be signalized.

The freedom in choice of the filter data for different signals to be filtered and/or different color components may be restricted in order to reduce the size of the signaled filter data. One example is the restriction to a symmetric filter for at least one signal to be filtered (decoded signal, prediction signal and quantized prediction error signal) and/or color component signal. Another example is the restriction to equal filters for two or three of the three signals (decoded signal, prediction signal and quantized prediction error signal) and/or color components.

Alternatively, some of the filter coefficients may be set fixedly. The values of the fixed coefficients may be also signaled less frequently than the variable filter coefficients, for instance, in the sequence header only.

Regarding the syntax, codewords may be added to the coded video signal and filter data for signalling for which of the three signals (decoded signal, prediction signal and quantized prediction error signal), filter coefficients are coded and transmitted. For instance, three bits may form a codeword, each of the three bits signaling the presence of filter data for the decoded signal, prediction signal and quantized prediction error signal, respectively. Such signalling may be performed, for instance, in the sequence, frame, or slice header.

A codeword "additional_extension_flag" may be included for the purpose of future extensions.

Figure 15 illustrates a system for transferring encoded video data from an encoder side to a decoder side in accordance with the present invention. An input video signal is encoded by an encoder 1501 and provided to a channel 1502. The encoder 1501 is an encoder in accordance with any of the embodiments of the present invention as described above. The channel 1502 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder side may also include preprocessing of the input video signal such as format conversion and/or transmitter for transmitting the encoded video signal over the channel 1502 or an application for transferring the encoded video signal into the storage. The encoded video signal is then obtained from the channel 1502 by a decoder 1503. The decoder 1503 is a decoder in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

According to a further embodiment, it is possible to easily perform the processing shown in the above embodiments in an independent computing system by recording a program for realizing the picture coding method and the picture decoding method shown in the above-mentioned embodiments onto the storage medium such as a flexible disk.

Figure 16 is an illustration of a recording medium for storing a program for realizing any of the described embodiments by a computer system.

Figure 16, part (b) shows a full appearance of a flexible disk, its structure at cross section and the flexible disk itself whereas Figure 16, part (a) shows an example of a physical format of the flexible disk as a main body of a storing medium. A flexible disk FD is contained in a case F, a plurality of tracks Tr are formed concentrically from the periphery to the inside on the surface of the disk, and each track is divided into 16 sectors Se in the angular direction. Therefore, as for the flexible disk storing the above-mentioned program, data as the aforementioned program is stored in an area assigned for it on the flexible disk FD.

Figure 16, part (c) shows a structure for recording and reading out the program on the flexible disk FD. When the program is recorded on the flexible disk FD, the computing system Cs writes in data as the program via a flexible disk drive. When the coding device and the decoding device are constructed in the computing system by the program on the flexible disk, the picture coding method and a picture decoding method as the program is read out from the flexible disk drive and then transferred to the computing system Cs.

The above explanation is made on an assumption that a storing medium is a flexible disk, however, the same processing can also be performed using an optical disk. In addition, the storing medium is not limited to a flexible disk and an optical disk, but any other medium such as an IC card and a ROM cassette capable of recording a program can be used.

According to still another embodiment, the following is an explanation of the applications of the picture coding method as well as the picture decoding method as shown in the above-mentioned embodiments, and a system using them.

Figure 17 is a block diagram showing an overall configuration of a content supply system ex100 for realizing content distribution service. The area for providing communication service is divided into cells of desired size, and cell sites ex107 to ex110, which are fixed wireless stations are placed in respective cells.

This content supply system ex100 is connected to devices such as Internet ex101, an Internet service provider ex102, a telephone network ex104, as well as a computer ex111, a PDA (Personal Digital Assistant) ex112, a camera ex113, a cell phone ex114 and a cell phone with a camera ex115 via the cell sites ex107 to ex110.

However, the content supply system ex100 is not limited to the configuration as shown in Figure 17 and may be connected to a combination of any of them. Also, each device may be connected directly to the telephone network ex104, not through the cell sites ex107 to ex110.

The camera ex113 is a device capable of shooting video such as a digital video camera. The cell phone ex114 may be a cell phone of any of the following system: a PDC (Personal Digital Communications) system, a CDMA (Code Division Multiple Access) system, a W-CDMA (Wideband-Code Division Multiple Access) system or a GSM (Global System for Mobile Communications) system, a PHS (Personal Handyphone System) or the like.

A streaming server ex103 is connected to the camera ex113 via the telephone network ex104 and also the cell site ex109, which realizes a live distribution or the like using the camera ex113 based on the coded data transmitted from the user. Either the camera ex113 or the server which transmits the data may code the data. Also, the picture data shot by a camera ex116 may be transmitted to the streaming server ex103 via the computer ex111. In this case, either the camera ex116 or the computer ex111 may code the picture data. An LSI ex117 included in the computer ex111 or the camera ex116 actually performs coding processing. Software for coding and decoding pictures may be integrated into any type of storage medium (such as a CD-ROM, a flexible disk and a hard disk) that is a recording medium which is readable by the computer ex111 or the like. Furthermore, a cell phone with a camera ex115 may transmit the picture data. This picture data is the data coded by the LSI included in the cell phone ex115.

The content supply system ex100 codes contents (such as a music live video) shot by a user using the camera ex113, the camera ex116 or the like in the same way as shown in the above-mentioned embodiments and transmits them to the streaming server ex103, while the streaming server ex103 makes stream distribution of the content data to the clients at their requests.

The clients include the computer ex111, the PDA ex112, the camera ex113, the cell phone ex114 and so on capable of decoding the above-mentioned coded data. In the content supply system ex100, the clients can thus receive and reproduce the coded data, and can further receive, decode and reproduce the data in real time so as to realize personal broadcasting.

When each device in this system performs coding or decoding, the picture coding method or the picture decoding method shown in the above-mentioned embodiments can be used.

A cell phone will be explained as an example of the device.

Figure 18 is a diagram showing the cell phone ex115 using the picture coding method and the picture decoding method explained in the above-mentioned embodiments. The cell phone ex115 has an antenna ex201 for communicating with the cell site ex110 via radio waves, a camera unit ex203 such as a CCD camera capable of shooting moving and still pictures, a display unit ex202 such as a liquid crystal display for displaying the data such as decoded pictures and the like shot by the camera unit ex203 or received by the antenna ex201, a body unit including a set of operation keys ex204, a audio output unit ex208 such as a speaker for outputting audio, a audio input unit ex205 such as a microphone for inputting audio, a storage medium ex207 for storing coded or decoded data such as data of moving or still pictures shot by the camera, data of received e-mails and that of moving or still pictures, and a slot unit ex206 for attaching the storage medium ex207 to the cell phone ex115. The storage medium ex207 stores in itself a flash memory element, a kind of EEPROM (Electrically Erasable and Programmable Read Only Memory) that is a nonvolatile memory electrically erasable from and rewritable to a plastic case such as an SD card.

Next, the cell phone ex115 will be explained with reference to Figure 19. In the cell phone ex115, a main control unit ex311, designed in order to control overall each unit of the main body which contains the display unit ex202as well as the operation keys ex204, is connected mutually to a power supply circuit unit ex310, an operation input control unit ex304, a picture coding unit ex312, a camera interface unit ex303, an LCD (Liquid Crystal Display) control unit ex302, a picture decoding unit ex309, a multiplexing/demultiplexing unit ex308, a read/write unit ex307, a modem circuit unit ex306and a audio processing unit ex305via a synchronous bus ex313.

When a call-end key or a power key is turned ON by a user's operation, the power supply circuit unit ex310 supplies respective units with power from a battery pack so as to activate the camera attached digital cell phone ex115 as a ready state.

In the cell phone ex115, the audio processing unit ex305 converts the audio signals received by the audio input unit ex205 in conversation mode into digital audio data under the control of the main control unit ex311 including a CPU, ROM and RAM, the modem circuit unit ex306 performs spread spectrum processing of the digital audio data, and the communication circuit unit ex301 performs digital-to-analog conversion and frequency conversion of the data, so as to transmit it via the antenna ex201. Also, in the cell phone ex115, the communication circuit unit ex301 amplifies the data received by the antenna ex201 in conversation mode and performs frequency conversion and analog-to-digital conversion to the data, the modem circuit unit ex306 performs inverse spread spectrum processing of the data, and the audio processing unit ex305 converts it into analog audio data, so as to output it via the audio output unit ex208.

Furthermore, when transmitting an e-mail in data communication mode, the text data of the e-mail inputted by operating the operation keys ex204 of the main body is sent out to the main control unit ex311 via the operation input control unit ex304. In the main control unit ex311, after the modem circuit unit ex306 performs spread spectrum processing of the text data and the communication circuit unit ex301 performs digital-to-analog conversion and frequency conversion for the text data, the data is transmitted to the cell site ex110 via the antenna ex201.

When picture data is transmitted in data communication mode, the picture data shot by the camera unit ex203 is supplied to the picture coding unit ex312 via the camera interface unit ex303. When it is not transmitted, it is also possible to display the picture data shot by the camera unit ex203 directly on the display unit ex202 via the camera interface unit ex303 and the LCD control unit ex302.

The picture coding unit ex312, which includes the picture coding apparatus as explained in the present invention, compresses and codes the picture data supplied from the camera unit ex203 by the coding method used for the picture coding apparatus as shown in the above-mentioned first embodiment so as to transform it into coded picture data, and sends it out to the multiplexing/demultiplexing unit ex308. At this time, the cell phone ex115 sends out the audio received by the audio input unit ex205 during the shooting with the camera unit ex203 to the multiplexing/demultiplexing unit ex308 as digital audio data via the audio processing unit ex305.

The multiplexing/demultiplexing unit ex308 multiplexes the coded picture data supplied from the picture coding unit ex312 and the audio data supplied from the audio processing unit ex305 using a predetermined method, then the modem circuit unit ex306 performs spread spectrum processing of the multiplexed data obtained as a result of the multiplexing, and lastly the communication circuit unit ex301 performs digital-to-analog conversion and frequency conversion of the data for the transmission via the antenna ex201.

As for receiving data of a moving picture file which is linked to a Web page or the like in data communication mode, the modem circuit unit ex306 performs inverse spread spectrum processing of the data received from the cell site ex110 via the antenna ex201, and sends out the multiplexed data obtained as a result of the inverse spread spectrum processing.

In order to decode the multiplexed data received via the antenna ex201, the multiplexing/demultiplexing unit ex308 separates the multiplexed data into a bit stream of picture data and that of audio data, and supplies the coded picture data to the picture decoding unit ex309 and the audio data to the audio processing unit ex305 respectively via the synchronous bus ex313.

Next, the picture decoding unit ex309, including the picture decoding apparatus as explained in the above-mentioned invention, decodes the bit stream of picture data using the decoding method corresponding to the coding method as shown in the above-mentioned embodiments to generate reproduced moving picture data, and supplies this data to the display unit ex202 via the LCD control unit ex302, and thus the picture data included in the moving picture file linked to a Web page, for instance, is displayed.

At the same time, the audio processing unit ex305 converts the audio data into analog audio data, and supplies this data to the audio output unit ex208, and thus the audio data included in the moving picture file linked to a Web page, for instance, is reproduced.

The present invention is not limited to the above-mentioned system as such ground-based or satellite digital broadcasting has been in the news lately and at least either the picture coding apparatus or the picture decoding apparatus described in the above-mentioned embodiments can be incorporated into a digital broadcasting system as shown in Figure 20. More specifically, a bit stream of video information is transmitted from a broadcast station ex409 to or communicated with a broadcast satellite ex410 via radio waves.

Upon receipt of it, the broadcast satellite ex410 transmits radio waves for broadcasting. Then, a home-use antenna ex406 with a satellite broadcast reception function receives the radio waves, and a television (receiver) ex401 or a set top box (STB) ex407 decodes the bit stream for reproduction. The picture decoding apparatus as shown in the above-mentioned embodiment can be implemented in the reproducing apparatus ex403 for reading out and decoding the bit stream recorded on a storage medium ex402 that is a recording medium such as CD and DVD. In this case, the reproduced video signals are displayed on a monitor ex404. It is also conceivable to implement the picture decoding apparatus in the set top box ex407 connected to a cable ex405 for a cable television or the antenna ex406 for satellite and/or ground-based broadcasting so as to reproduce them on a monitor ex408 of the television ex401. The picture decoding apparatus may be incorporated into the television, not in the set top box. Also, a car ex412 having an antenna ex411 can receive signals from the satellite ex410 or the cell site ex107 for reproducing moving pictures on a display device such as a car navigation system ex413 set in the car ex412.

Furthermore, the picture coding apparatus as shown in the above-mentioned embodiments can code picture signals and record them on a recording medium. As a concrete example, a recorder ex420 such as a DVD recorder for recording picture signals on a DVD disk ex421, a disk recorder for recording them on a hard disk can be cited. They can be recorded on an SD card ex422. If the recorder ex420 includes the picture decoding apparatus as shown in the above-mentioned embodiments, the picture signals recorded on the DVD disk ex421 or the SD card ex422 can be reproduced for display on the monitor ex408. As for the structure of the car navigation system ex413, the structure without the camera unit ex203, the camera interface unit ex303 and the picture coding unit ex312, out of the components shown in Figure19, is conceivable. The same applies for the computer ex111, the television (receiver) ex401 and others.

In addition, three types of implementations can be conceived for a terminal such as the above-mentioned cell phone ex114; a sending/receiving terminal implemented with both a coder and a decoder, a sending terminal implemented with a coder only, and a receiving terminal implemented with a decoder only. As described above, it is possible to use the picture coding method or the picture decoding method described in the above-mentioned embodiments for any of the above-mentioned devices and systems, and by using this method, the effects described in the above-mentioned embodiments can be obtained.

Another embodiment of the invention relates to the implementation of the above described various embodiments using hardware and software. It is recognized that the various embodiments of the invention may be implemented or performed using computing devices (processors). A computing device or processor may for example be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/AVC based video coding system, and the terminology mainly relates to the H.264/AVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/AVC coding currently discussed by the JVT.

Summarizing, the decoding of a video signal according to the present invention employs filtering for at least two of the prediction signal, prediction error signal and reconstructed video signal separately and based on filter data provided from the encoder side, wherein the filter data is encoded by exploiting statistical dependencies between the at least two of the prediction signal, prediction error signal and reconstructed video signal.

**Claims**

1. A method for encoding a video signal including at least one video frame, the method comprising the steps of:

    determining a prediction signal by predicting a video signal (160, 170) in spatial or temporal respect;
    calculating (105) a prediction error signal based on the prediction signal;
    reconstructing a video signal based on the prediction signal and the prediction error signal,
    **characterized by**
    determining (540) filter data for filtering at least two of the prediction signal, the prediction error signal and the reconstructed video signal; and
    encoding (590) the determined filter data based on a statistical relation between the filter data of the at least two of the prediction signal, the prediction error signal and the reconstructed video signal.

2. A method for decoding an encoded video signal including at least one video frame, the method comprising the steps of:

    determining a prediction signal by predicting a video signal (260, 270) in spatial or temporal respect;
    obtaining from the encoder side a prediction error signal;
    reconstructing a video signal based on the prediction signal and the prediction error signal,
    **characterized by**
    decoding (690) filter data based on a statistical relation between the filter data of at least two of the prediction signal, the prediction error signal and the reconstructed video signal; and
    setting-up (640) a filter in accordance with the decoded filter data and filtering the at least two of the prediction signal, the prediction error signal and the reconstructed video signal.

3. The method according to claim 1 further comprising quantization of the prediction error signal, wherein the filter data are determined based on the prediction signal, the quantized prediction error signal, the reconstructed video signal and a video signal input to the encoder, and wherein the filter data of the prediction signal, the quantized prediction error signal, and the reconstructed video signal are encoded based on their pair-wise statistical dependencies.

4. A method according to any of claims 1 to 3 wherein the filter data are coded using at least one of predictive coding, transformation coding, coding based on a Markov model, and a joint entropy coding.

5. The method according to any of claims 1 to 4 wherein
    the filter data are determined for each color component separately; and
    the filter data of a first color component are encoded based on a statistical relation between the filter data of the first color component and the filter data of another color component.

6. The method according to any of claims 1 to 5 wherein
    the filter data includes at least one of filter coefficients, filter length, filter data quantization information, offset, coding type of the filter data, and a cross correlation between a video signal input to the encoder and at least one of the prediction signal, the prediction error signal, and the reconstructed video signal.

7. The method according to any of claims 1 to 6 wherein the filter data of the prediction signal are predicted based on the filter data of the reconstructed video signal and wherein a difference between the filter data of the prediction signal and the prediction thereof is encoded.

8. The method according to any of claims 1 to 7 wherein
    the filter data includes filter data quantization information encoded using shorter codewords for filter data quantization information values specifying lower accuracy;
    at least one of offset, filter coefficients or cross correlation between a video signal input to the encoder and at least one of the prediction signal, the prediction error signal, or the reconstructed video signal, is encoded in accordance with the filter data quantization information and included in the filter data.

9. The method according to any of claims 1 to 8 wherein the filter data is included within the bitstream after the coded video signal to be filtered therewith.

10. A computer program product comprising a computer readable medium having a computer readable program code embodied thereon, the program code being adapted to carry out the method according to any of claims 1 to 9.

11. An apparatus for encoding a video signal including at least one video frame, the apparatus comprising:

a predictor (160, 170) for determining a prediction signal by predicting a video signal in spatial or temporal respect;
a subtracter (105) for calculating a prediction error signal based on the prediction signal;
a reconstructor for reconstructing a video signal based on the prediction signal and the prediction error signal, **characterized by**
a filter design unit for determining (540) filter data for filtering at least two of the prediction signal, the prediction error signal and the reconstructed video signal; and
a filter data encoder (590) for encoding the determined filter data based on a statistical relation between the filter data of the at least two of the prediction signal, the prediction error signal and the reconstructed video signal.

12. An apparatus for decoding an encoded video signal including at least one video frame, the apparatus comprising:

a predictor (260, 270) for determining a prediction signal by predicting a video signal in spatial or temporal respect;
a reconstructor for reconstructing a video signal based on the prediction signal and a prediction error signal, wherein the apparatus is capable of obtaining the prediction error signal from the encoder side, **characterized by**
a decoder (690) for decoding filter data based on a statistical relation between the filter data of at least two of the prediction signal, the prediction error signal and the reconstructed video signal; and
a filter design unit (640) for setting-up a filter in accordance with the decoded filter data and for filtering the at least two of the prediction signal, the prediction error signal and the reconstructed video signal.

13. The apparatus according to claim 11 further comprising

a quantizer for quantizing of the prediction error signal, wherein
the filter design unit is capable of determining the filter data based on the predicted video signal, the quantized prediction error signal, the reconstructed video signal and a video signal input to the encoder, and wherein the filter data of the prediction signal, the quantized prediction error signal, and the reconstructed video signal are encoded based on their pair-wise statistical dependencies.

14. The apparatus according to any of claims 11 to 13 wherein the filter data are coded using at least one of predictive coding, transformation coding, coding based on a Markov model, and a joint entropy coding.

15. The apparatus according to any of claims 11 to 14 wherein
the filter data are determined for each color component separately; and
the filter data of a first color component are coded based on a statistical relation between the filter data of the first color component and the filter data of another color component.

16. The apparatus according to any of claims 11 to 15 wherein
the filter data includes at least one of filter coefficients, filter length, filter data quantization information, offset, coding type of the filter data, and a cross correlation between a video signal input to the encoder and at least one of the prediction signal, the prediction error signal, and the reconstructed video signal.

17. The apparatus according to any of claims 11 to 16 wherein the filter data of the prediction signal are predicted based on the filter data of the reconstructed video signal and wherein a difference between the filter data of the prediction signal and the prediction thereof is encoded.

18. The apparatus according to any of claims 11 to 17 wherein
the filter data includes filter data quantization information encoded using shorter codewords for filter data quantization information values specifying lower accuracy;
at least one of offset, filter coefficients or cross correlation between a video signal input to the encoder and at least one of the prediction signal, the prediction error signal, or the reconstructed video signal, is encoded in accordance with the filter data quantization information and included in the filter data.

19. The apparatus according to any of claims 11 to 18 wherein the filter data is included within the bitstream after the coded video signal to be filtered therewith.

# Fig. 1

Input Signal → (+) 105 → Prediction Error → Transform / Quantization 110 → Quantized Coefficients → Entropy Coding 190 → Encoded Signal

inv. Quant. / inv. Transform 120

Quantized Prediction Error Signal

Prediction Signal

(+) 125

Reconstructed Signal

Deblocking Filter 130

Post Filter Information

Intra-Frame Prediction 170

Decoded Signal

Post Filter Design 180

Motion Comp. Prediction 160

Interpolation Filter 150

Memory 140

175 Intra / Inter

Motion Data

Motion Estimation 165

100

EP 2 237 558 A1

# Fig. 2

EP 2 237 558 A1

# Fig. 3

301                    Vertical boundary         302

| p3 | p2 | p1 | p0 | q0 | q1 | q2 | q3 |

310

# Fig. 4

$n$

$s$  →  (+)  →  $s'$  →  | 400 Wiener Filter |  →  $s''$

EP 2 237 558 A1

# Fig. 5

# Fig. 6

Motion data

EP 2 237 558 A1

# Fig. 7

EP 2 237 558 A1

# Fig. 8

EP 2 237 558 A1

# Fig. 9A

| 901 | | 902 | | 903 | |
|---|---|---|---|---|---|
| Header data | Alignment data | Filter data | Alignment data | Macroblock data | Alignment data |

Code word of arithmetic coder          Code word of arithmetic coder          Code word of arithmetic coder

# Fig. 9B

| 911 | 912 | 913 |
|---|---|---|
| Header data | Macroblock data | Filter data |

Code word of
arithmetic coder

| 921 | 922 | 923 |
|---|---|---|
| Header data | Macroblock data | Filter data |

Code word of          Code word of          Code word of
arithmetic coder       arithmetic coder       arithmetic coder

EP 2 237 558 A1

# Fig. 10A

**Equation 1011:**

$$\text{coeff\_rec}[c][cy][cx]=\begin{cases}\text{filter\_hint\_rec}[c][cy][cx]+\text{Wiener\_Filter\_Precision}[c] & ;cx=\dfrac{(\text{filter\_hint\_size\_rec\_x}-1)}{2}\wedge cy=\dfrac{(\text{filter\_hint\_size\_rec\_y}-1)}{2}\\ \text{filter\_hint\_rec}[c][cy][cx] & ;\qquad\qquad\text{else}\end{cases}$$

**Equation 1012:**

$$\text{coeff\_pred}[c][cy][cx]=\begin{cases}\text{filter\_hint\_pred}[c][cy][cx]+(\text{Wiener\_Filter\_Precision}[c]-\text{coeff\_rec}[c][cy][cx]);\\[4pt] \qquad cx=\dfrac{(\text{filter\_hint\_size\_pred\_x}-1)}{2}\wedge cy=\dfrac{(\text{filter\_hint\_size\_pred\_y}-1)}{2}\\[4pt] \qquad\qquad\text{filter\_hint\_pred}[c][cy][cx];\\ \qquad\qquad\qquad\text{else}\end{cases}$$

**Equation 1013:**

$$\text{coeff\_qpe}[c][cy][cx]=\begin{cases}\text{filter\_hint\_qpe}[c][cy][cx]+\text{coeff\_pred}[c][cy][cx]+ & ;cx=\dfrac{(\text{filter\_hint\_size\_qpe\_x}-1)}{2}\wedge cy=\dfrac{(\text{filter\_hint\_size\_qpe\_y}-1)}{2}\\ \text{filter\_hint\_qpe}[c][cy][cx] & ;\qquad\qquad\text{else}\end{cases}$$

# Fig. 10B

**Equation 1020:**

$$filtered\_image[c][y][x] = \sum_{j=0}^{filter\_hint\_size\_rec\_y-1} \sum_{i=0}^{filter\_hint\_size\_rec\_x-1} coeff\_rec[c][j][i] \cdot$$

$$\cdot\, decoded\_image[c]\left[ y + j - \frac{filter\_hint\_size\_rec\_y - 1}{2} \right]\left[ x + i - \frac{filter\_hint\_size\_rec\_x - 1}{2} \right] +$$

$$+ \sum_{j=0}^{filter\_hint\_size\_pred\_y-1} \sum_{i=0}^{filter\_hint\_size\_pred\_x-1} coeff\_pred[c][j][i] \cdot$$

$$\cdot\, pred\_image[c]\left[ y + j - \frac{filter\_hint\_size\_pred\_y - 1}{2} \right]\left[ x + i - \frac{filter\_hint\_size\_pred\_x - 1}{2} \right] +$$

$$+ \sum_{j=0}^{filter\_hint\_size\_qpe\_y-1} \sum_{i=0}^{filter\_hint\_size\_qpe\_x-1} coeff\_qpe[c][j][i] \cdot$$

$$\cdot\, qpe\_image[c]\left[ y + j - \frac{filter\_hint\_size\_qpe\_y - 1}{2} \right]\left[ x + i - \frac{filter\_hint\_size\_qpe\_x - 1}{2} \right] +$$

$$+\, filter\_hint\_offset[c]$$

# Fig. 10C

**Equation 1030:**

$$\text{filtered\_image\_clipped}[c][y][x] = \begin{cases} 0; \text{floor}\left(\left(\text{filtered\_image}[c][y][x] + \dfrac{\text{Wiener\_Filter\_Precision}[c]}{2}\right)/\text{Wiener\_Filter\_Precision}[c]\right) < 0 \\ 255; \text{floor}\left(\left(\text{filtered\_image}[c][y][x] + \dfrac{\text{Wiener\_Filter\_Precision}[c]}{2}\right)/\text{Wiener\_Filter\_Precision}[c]\right) > 255 \\ \text{floor}\left(\left(\text{filtered\_image}[c][y][x] + \dfrac{\text{Wiener\_Filter\_Precision}[c]}{2}\right)/\text{Wiener\_Filter\_Precision}[c]\right); \text{else} \end{cases}$$

**Equation 1040:**

$$\text{filtered\_image\_clipped}[c][y][x] = \begin{cases} 0; \text{floor}\left(\left(\text{filtered\_image}[c][y][x] + (\text{Wiener\_Filter\_Precision}[c] \gg 1)\right) \gg \alpha[c]\right) < 0 \\ 255; \text{floor}\left(\left(\text{filtered\_image}[c][y][x] + (\text{Wiener\_Filter\_Precision}[c] \gg 1)\right) \gg \alpha[c]\right) > 255 \\ \text{floor}\left(\left(\text{filtered\_image}[c][y][x] + (\text{Wiener\_Filter\_Precision}[c] \gg 1)\right) \gg \alpha[c]\right); \text{else} \end{cases}$$

EP 2 237 558 A1

# Fig. 11A

**Equation 1111:**

$$\text{coeff\_rec\_x}[c][cx] = \begin{cases} \text{filter\_hint\_rec\_x}[c][cx] + \text{Wiener\_Filter\_Precision}[c] & ; cx = \dfrac{(\text{filter\_hint\_size\_rec\_x} - 1)}{2} \\ \text{filter\_hint\_rec\_x}[c][cx] & ; \quad \text{else} \end{cases}$$

**Equation 1112:**

$$\text{coeff\_rec\_y}[c][cy] = \begin{cases} \text{filter\_hint\_rec\_y}[c][cy] + \text{Wiener\_Filter\_Precision}[c] & ; cy = \dfrac{(\text{filter\_hint\_size\_rec\_y} - 1)}{2} \\ \text{filter\_hint\_rec\_y}[c][cy] & ; \quad \text{else} \end{cases}$$

**Equation 1113:**

$$\text{coeff\_pred\_x}[c][cx] = \begin{cases} \text{filter\_hint\_pred\_x}[c][cx] + (\text{Wiener\_Filter\_Precision}[c] - \text{coeff\_rec\_x}[c][cx]) & ; cx = \dfrac{(\text{filter\_hint\_size\_pred\_x} - 1)}{2} \\ \text{filter\_hint\_pred\_x}[c][cx] & ; \quad \text{else} \end{cases}$$

# Fig. 11B

**Equation 1114:**

$$\text{coeff\_pred\_y[c][cy]} = \begin{cases} \text{filter\_hint\_pred\_y[c][cy]} + (\text{Wiener\_Filter\_Precision[c]} - \text{coeff\_rec\_y[c][cy]}) & ; cy = \dfrac{(\text{filter\_hint\_size\_pred\_y} - 1)}{2} \\ \text{filter\_hint\_pred\_y[c][cy]} & ; \text{else} \end{cases}$$

**Equation 1115:**

$$\text{coeff\_qpe\_x[c][cx]} = \begin{cases} \text{filter\_hint\_pred\_x[c][cx]} + \text{coeff\_pred\_x[c][cx]} & ; cx = \dfrac{(\text{filter\_hint\_size\_qpe\_x} - 1)}{2} \\ \text{filter\_hint\_qpe\_x[c][cx]} & ; \text{else} \end{cases}$$

**Equation 1116:**

$$\text{coeff\_qpe\_y[c][cy]} = \begin{cases} \text{filter\_hint\_pred\_y} + \text{coeff\_pred\_y[c][cy]} & ; cy = \dfrac{(\text{filter\_hint\_size\_qpe\_y} - 1)}{2} \\ \text{filter\_hint\_qpe\_y[c][cy]} & ; \text{else} \end{cases}$$

EP 2 237 558 A1

# Fig. 11C

**Equation 1121:**

$$\text{filtered\_image\_x[c][y][x]} = \sum_{i=0}^{\text{filter\_hint\_size\_rec\_x}} \text{coeff\_rec\_x[c][i]} \cdot$$

$$\cdot \text{decoded\_image}[c][y]\left[x + i - \frac{\text{filter\_hint\_size\_rec\_x} - 1}{2}\right] +$$

$$+ \sum_{i=0}^{\text{filter\_hint\_size\_pred\_x}} \text{coeff\_pred\_x[c][i]} \cdot \text{pred\_image}[c][y]\left[x + i - \frac{\text{filter\_hint\_size\_pred\_x} - 1}{2}\right] +$$

$$+ \sum_{i=0}^{\text{filter\_hint\_size\_qpe\_x}} \text{coeff\_qpe\_x[c][i]} \cdot \text{qpe\_image}[c][y]\left[x + i - \frac{\text{filter\_hint\_size\_qpe\_x} - 1}{2}\right]$$

# Fig. 11D

**Equation 1122:**

$$\text{filtered\_image\_xy}[c][y][x] = \sum_{j=0}^{\text{filter\_hint\_size\_rec\_y}} \text{coeff\_rec\_y}[c][j] \cdot$$

$$\cdot \text{filtered\_image\_clipped\_x}[c]\left[y+j-\frac{\text{filter\_hint\_size\_rec\_y} - 1}{2}\right][x]+$$

$$+ \sum_{j=0}^{\text{filter\_hint\_size\_pred\_y}} \text{coeff\_pred\_y}[c][j] \cdot \text{prediction\_image}[c]\left[y+j-\frac{\text{filter\_hint\_size\_pred\_y} - 1}{2}\right][x]+$$

$$+ \sum_{j=0}^{\text{filter\_hint\_size\_qpe\_y}} \text{coeff\_qpe\_y}[c][j] \cdot \text{qpe\_image}[c]\left[y+j-\frac{\text{filter\_hint\_size\_qpe\_y} - 1}{2}\right][x]+$$

$$+ \text{filter\_hint\_offset}[c]$$

# Fig. 11E

**Equation 1131:**

$$\text{filtered\_image\_clipped\_x}[c][y][x] = \begin{cases} 0; \text{floor}\left(\left(\text{filtered\_image\_x}[c][y][x] + \dfrac{\text{Wiener\_Filter\_Precision}[c]}{2}\right)/\text{Wiener\_Filter\_Precision}[c]\right) < 0 \\ 255; \text{floor}\left(\left(\text{filtered\_image\_x}[c][y][x] + \dfrac{\text{Wiener\_Filter\_Precision}[c]}{2}\right)/\text{Wiener\_Filter\_Precision}[c]\right) > 255 \\ \text{floor}\left(\left(\text{filtered\_image\_x}[c][y][x] + \dfrac{\text{Wiener\_Filter\_Precision}[c]}{2}\right)/\text{Wiener\_Filter\_Precision}[c]\right); \text{else} \end{cases}$$

**Equation 1132:**

$$\text{filtered\_image\_clipped}[c][y][x] = \begin{cases} 0; \text{floor}\left(\left(\text{filtered\_image\_xy}[c][y][x] + \dfrac{\text{Wiener\_Filter\_Precision}[c]}{2}\right)/\text{Wiener\_Filter\_Precision}[c]\right) < 0 \\ 255; \text{floor}\left(\left(\text{filtered\_image\_xy}[c][y][x] + \dfrac{\text{Wiener\_Filter\_Precision}[c]}{2}\right)/\text{Wiener\_Filter\_Precision}[c]\right) > 255 \\ \text{floor}\left(\left(\text{filtered\_image\_xy}[c][y][x] + \dfrac{\text{Wiener\_Filter\_Precision}[c]}{2}\right)/\text{Wiener\_Filter\_Precision}[c]\right); \text{else} \end{cases}$$

# Fig. 12A

**Equation 1211:**

$$cc\_rec[c][cy][cx] = \frac{1}{Wiener\_Filter\_Precision[c]} \times \begin{cases} filter\_hint\_rec[c][cy][cx] + Wiener\_Filter\_Precision[c]; \\[6pt] cx = \frac{(filter\_hint\_size\_rec\_x - 1)}{2} \wedge cy = \frac{(filter\_hint\_size\_rec\_y - 1)}{2} \\[6pt] filter\_hint\_rec[c][cy][cx]; \\ else \end{cases}$$

**Equation 1212:**

$$cc\_pred[c][cy][cx] = \frac{1}{Wiener\_Filter\_Precision[c]} \times$$

$$\times \begin{cases} filter\_hint\_pred[c][cy][cx] + (Wiener\_Filter\_Precision[c] - cc\_rec[c][cy][cx]); \\[6pt] cx = \frac{(filter\_hint\_size\_pred\_x - 1)}{2} \wedge cy = \frac{(filter\_hint\_size\_pred\_y - 1)}{2} \\[6pt] filter\_hint\_pred[c][cy][cx]; \\ else \end{cases}$$

EP 2 237 558 A1

# Fig. 12B

**Equation 1213:**

$$cc\_qpe[c][cy][cx] = \frac{1}{Wiener\_Filter\_Precision[c]} \times$$

$$\times \begin{cases} filter\_hint\_qpe[c][cy][cx] + cc\_pred[c][cy][cx] & ; cx = \dfrac{(filter\_hint\_size\_qpe\_x - 1)}{2} \wedge cy = \dfrac{(filter\_hint\_size\_qpe\_y - 1)}{2} \\ filter\_hint\_qpe[c][cy][cx] & ; \quad\quad\quad else \end{cases}$$

# Fig. 13A

**Equation 1311:**

$$cc\_rec\_x[c][cx] = \frac{1}{Wiener\_Filter\_Precision[c]} \times \begin{cases} filter\_hint\_rec\_x[c][cx] + Wiener\_Filter\_Precision[c] & ; cx = \dfrac{(filter\_hint\_size\_rec\_x - 1)}{2} \\ filter\_hint\_rec\_x[c][cx] & ; \quad\quad else \end{cases}$$

**Equation 1312:**

$$cc\_rec\_y[c][cy] = \frac{1}{Wiener\_Filter\_Precision[c]} \times \begin{cases} filter\_hint\_rec\_y[c][cy] + Wiener\_Filter\_Precision[c] & ; cy = \dfrac{(filter\_hint\_size\_rec\_y - 1)}{2} \\ filter\_hint\_rec\_y[c][cy] & ; \quad\quad else \end{cases}$$

# Fig. 13B

**Equation 1313:**

$$cc\_pred\_x[c][cx] = \cfrac{1}{Wiener\_Filter\_Precision[c]} \times$$

$$\times \begin{cases} \dfrac{filter\_hint\_pred\_x[c][cx] + (Wiener\_Filter\_Precision[c] - cc\_rec\_x[c][cx])}{filter\_hint\_pred\_x[c][cx]} & ; cx = \dfrac{(filter\_hint\_size\_pred\_x - 1)}{2} \\ & ; \quad else \end{cases}$$

**Equation 1314:**

$$cc\_pred\_y[c][cy] = \cfrac{1}{Wiener\_Filter\_Precision[c]} \times$$

$$\times \begin{cases} \dfrac{filter\_hint\_pred\_y[c][cy] + (Wiener\_Filter\_Precision[c] - cc\_rec\_y[c][cy])}{filter\_hint\_pred\_y[c][cy]} & ; cy = \dfrac{(filter\_hint\_size\_pred\_y - 1)}{2} \\ & ; \quad else \end{cases}$$

EP 2 237 558 A1

# Fig. 13C

**Equation 1315:**

$$cc\_qpe\_x[c][cx] = \frac{1}{\text{Wiener\_Filter\_Precision}[c]} \times \begin{cases} \text{filter\_hint\_qpe\_x}[c][cx] + cc\_pred\_x[c][cx] & ; cx = \frac{(\text{filter\_hint\_size\_qpe\_x} - 1)}{2} \\ \text{filter\_hint\_qpe\_x}[c][cx] & ; \text{else} \end{cases}$$

**Equation 1316:**

$$cc\_qpe\_y[c][cy] = \frac{1}{\text{Wiener\_Filter\_Precision}[c]} \times \begin{cases} \text{filter\_hint\_qpe\_y}[c][cy] + cc\_pred\_y[c][cy] & ; cy = \frac{(\text{filter\_hint\_size\_qpe\_y} - 1)}{2} \\ \text{filter\_hint\_qpe\_y}[c][cy] & ; \text{else} \end{cases}$$

EP 2 237 558 A1

# Fig. 14

| | | |
|---|---|---|
| Neighboring block ($m=2$) | Neighboring block ($m=3$) | Neighboring block ($m=4$) |
| Neighboring block ($m=5$) | Current block ($m=1$) | Neighboring block ($m=6$) |
| Neighboring block ($m=7$) | Neighboring block ($m=8$) | Neighboring block ($m=9$) |

# Fig. 15

Input Signal → | 1501 Encoder | → | 1502 Channel | → | 1503 Decoder | →

Encoder side | Decoder side

EP 2 237 558 A1

(a)

(b)

(c)

# Fig. 16

# Fig. 17

Streaming server ex103

Internet ex101

Internet service provider ex102

Telephone network ex104

ex107

ex108

ex109

ex110

LSI ex117

Camera ex116

Computer ex111

PDA ex112

Camera ex113

Cell phone ex115

Cell phone ex114

ex100

EP 2 237 558 A1

ex 201

ex 208

ex 202

ex 203

ex 204

ex 206

ex 207

ex 205

ex 115

# Fig. 18

# Fig. 19

ex115

# Fig. 20

ex402

Monitor ex404

Reproducing apparatus ex403

Satellite ex410

Antenna ex411

Car ex412

Antenna ex406

Car navigation ex413

Cable ex405

Broadcast station ex409

Monitor ex408

ex421

STB ex407

ex422

TV ex401

SD

Recorder ex420

## EUROPEAN SEARCH REPORT

**Application Number**

EP 09 16 5804

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | EP 2 048 886 A (PANASONIC CORP [JP]) 15 April 2009 (2009-04-15) * figures 3,4 * * paragraphs [0006], [0007], [0021] - [0053], [0074], [0098] - [0106] * ----- | 1,2, 10-12 | INV. H04N7/26 H04N7/50 |
| X | EP 1 841 230 A (MATSUSHITA ELECTRIC IND CO LTD [JP]) 3 October 2007 (2007-10-03) * abstract; figures 1,3-9 * * paragraphs [0018], [0025] - [0027], [0034], [0039] - [0068], [0074] * ----- | 1-19 | |
| X | EP 2 003 896 A (PANASONIC CORP [JP]) 17 December 2008 (2008-12-17) * figures 1-3 * * paragraphs [0010] - [0017] * ----- | 1,2, 10-12 | |
| X | WEDI THOMAS: "Advanced motion compensated prediction methods" ITU-T VIDEO CODING EXPERTS GROUP (ITU-T SG16 Q.6), XX, XX, 18 October 2003 (2003-10-18), pages 1-8, XP002454495 * paragraph [0003] * ----- | 1,2,4, 10-12,14 | TECHNICAL FIELDS SEARCHED (IPC) H04N |
| X | KIMATA H ET AL: "3D ADAPTIVE MOTION VECTOR CODING INTEGRATED WITH BLOCK-BASED ADAPTIVE INTERPOLATION FILTER" SYSTEMS & COMPUTERS IN JAPAN, WILEY, HOBOKEN, NJ, US, vol. 35, no. 14, 1 December 2004 (2004-12-01), pages 10-20, XP001211995 ISSN: 0882-1666 * abstract * * paragraphs [04.1], [04.3] * ----- -/-- | 1,2,4, 10-12,14 | |

The present search report has been drawn up for all claims

| Place of search | Date of completion of the search | Examiner |
|---|---|---|
| Munich | 14 August 2009 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ........................................................................................................

& : member of the same patent family, corresponding document

EPO FORM 1503 03.82 (P04C01)

**EUROPEAN SEARCH REPORT**

Application Number

EP 09 16 5804

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/108654 A (UNIV HANNOVER [DE]; VATIS YURI [DE]; EDLER BERND [DE]; WASSERMANN INGO) 19 October 2006 (2006-10-19) * abstract * * page 3, paragraphs 3,4 * * page 5, last paragraph * ----- | 1,2,4, 10-12,14 | |
| X | US 2006/093039 A1 (YASUDA GOKI [JP] ET AL) 4 May 2006 (2006-05-04) * abstract; figure 2 * * paragraphs [0032], [0058] - [0064] * ----- | 1,2, 10-12 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 14 August 2009 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 09 16 5804

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2009

| Patent document cited in search report | | Publication date | Patent family member(s) | | Publication date |
|---|---|---|---|---|---|
| EP 2048886 | A | 15-04-2009 | WO | 2009047917 A1 | 16-04-2009 |
| EP 1841230 | A | 03-10-2007 | CN | 101411201 A | 15-04-2009 |
| EP 2003896 | A | 17-12-2008 | WO | 2008152797 A1 | 18-12-2008 |
| WO 2006108654 | A | 19-10-2006 | EP | 1886502 A2 | 13-02-2008 |
| | | | JP | 2008536414 T | 04-09-2008 |
| | | | US | 2009022220 A1 | 22-01-2009 |
| US 2006093039 | A1 | 04-05-2006 | JP | 4284265 B2 | 24-06-2009 |
| | | | JP | 2006135376 A | 25-05-2006 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Adaptive Filter Theory. **S. Haykin.** Prentice Hall Information and System Sciences Series. Prentice Hall, 2002